(19)

**Europäisches Patentamt**
**European Patent Office**
**Office européen des brevets**

(11) **EP 2 873 947 B1**

(12) **EUROPEAN PATENT SPECIFICATION**

(45) Date of publication and mention
of the grant of the patent:
**27.02.2019 Bulletin 2019/09**

(51) Int Cl.:
***G01C 11/02*** *(2006.01)*

(21) Application number: **14185674.0**

(22) Date of filing: **19.09.2014**

(54) **System and method of automatic monitoring of linear ground objectives for a remotely piloted aircraft**

System und Verfahren zur automatischen Überwachung von linearen Bodenzielen für ein ferngesteuertes Luftfahrzeug

Système et procédé de contrôle automatique des objectifs de masse linéaire destiné à un aéronef piloté à distance

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2013 IT TO20130763**

(43) Date of publication of application:
**20.05.2015 Bulletin 2015/21**

(73) Proprietor: **LEONARDO S.p.A.**
**00195 Roma (IT)**

(72) Inventor: **Lunghi, Alessio**
**10142 Torino (IT)**

(74) Representative: **Bertolotto, Simone et al**
**Studio Torta S.p.A.**
**Via Viotti, 9**
**10121 Torino (IT)**

(56) References cited:
**US-A1- 2010 305 782**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 873 947 B1

**Description**

The present invention relates to a system and a method of automatic monitoring of linear ground objectives for an aircraft, in particular a remotely piloted aircraft.

Unmanned aerial systems (UAS) and, in particular, remotely piloted aircraft, or unmanned aircraft, also known as UAVs (Unmanned Aerial Vehicle) are known in the state of the art. In systems of this type, it is wished to increase the automation of both the flight procedures of the UAVs and the operations (e.g. monitoring) carried out by the UAVs more and more. For example, environmental monitoring, including the observation of predetermined ground targets, is one of the main tasks performed by unmanned aerial vehicles. The targets to be monitored are typically areas of land, buildings, infrastructures or other things, for example, rivers, coastal areas, roads, oil pipelines, etc.

The monitoring of these targets is usually performed using an image acquisition device (e.g. video camera) mounted on board the unmanned aerial vehicle and handled manually from the ground by a skilled operator, or via automated equipment on board or on the ground.

It is obvious that, according to the known art, monitoring must always take place within a range of action that allows radio contact to be maintained between the ground station and the unmanned aerial vehicle. Alternative systems contemplate using BLOS (Beyond Line Of Sight) satellite links, which at least partially overcome shortcomings due to the limited range of action of the previously mentioned approach. In any case, the operator must be able to handle the image acquisition device in an precise manner so as to compensate for any changes in the flight trajectory of the unmanned aerial vehicle. The need is therefore felt to automate the ground monitoring procedure during the phases of flight of unmanned aerial vehicles.

Document US2010/305782 relates to an airborne video recording system for imaging pipeline and electric line rights-of-way, or other linear ground features. However, there still exist situation in which the imaging is not satisfactory.

The object of the present invention is to provide a system and a method of monitoring linear ground objectives for aircraft such as to overcome the drawbacks of the known art.

According to the present invention, a system and a method of monitoring linear ground objectives for aircraft are provided as defined in the appended claims.

For a better understanding of the present invention some preferred embodiments will now be described, purely by way of non-limitative example, with reference to the accompanying drawings, where:

- Figure 1 shows an aircraft equipped with an automatic monitoring system according to one embodiment of the present invention;
- Figure 2 shows, in schematic form and from above, a an area of land to be monitored in which there is an objective to be monitored, schematized by a simple polygonal chain, according to one aspect of the present invention;
- Figure 3 shows the aircraft 1 in an operative position with respect to the objective to be monitored in Figure 2;
- Figure 4 shows, from above, the area of land to be monitored of Figure 2 subdivided into a plurality of operating areas for monitoring by the aircraft in Figure 1, according to one aspect of the present invention;
- Figure 5 shows a first portion of the simple polygonal chain in Figure 2 subdivided into a plurality of sub-segments to be monitored, according to one aspect of the present invention;
- Figure 6 graphically illustrates the method of monitoring the first portion of the simple polygonal chain in Figure 2 when the aircraft 1 is in a predetermined operating area;
- Figure 7 graphically illustrates the method of monitoring a second portion of the simple polygonal chain in Figure 2, contiguous with the first portion in Figure 6, when the aircraft 1 is in a predetermined operating area contiguous with the operating area in Figure 6; and
- Figure 8 graphically illustrates the method of monitoring the first and second portions of the simple polygonal chain in Figures 6 and 7 when the monitor initiation command is given while the aircraft is flying over the operating area in Figure 6 and in Figure 7, respectively.

According to one aspect of the present invention, a system of automatic monitoring of ground objectives is provided that is can be installed on an unmanned aerial vehicle (UAV). The monitoring system includes an image and/or video acquisition device (for example, an electro-optic stabilized turret). The monitoring system enables observation (through image and/or video shooting) of predetermined land areas (e.g. natural, such as rivers or coastal areas, or artificial, such as roads or pipelines, etc.).

Usually, an unmanned aerial vehicle follows a predetermined flight path, planned prior to the start of the monitoring mission. Nevertheless, the route may change due to specific circumstances. According to present invention, the image/video acquisition device is automatically controlled so as to acquire images/video of the predetermined land area independently of the route followed by the unmanned aerial vehicle, and so as to always acquire the best possible view.

The method of controlling the image/video acquisition device does not contemplate any action on the part of a ground operator.

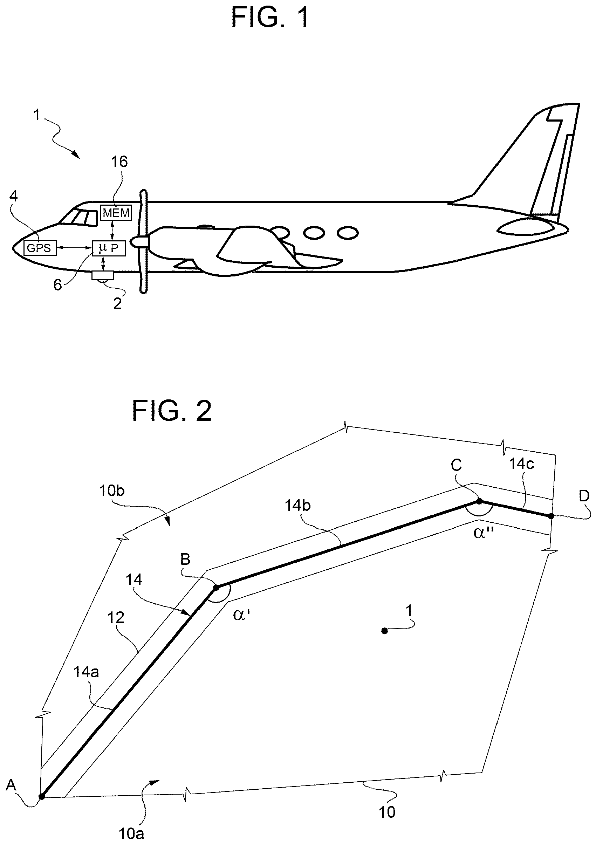

Figure 1 shows an aircraft 1, in particular an unmanned aerial vehicle (UAV), equipped with an image and/or video acquisition device such as a photo/video camera 2 (hereinafter simply referred to as camera 2, without any loss of generality). Advantageously, the camera 2 is located on a bottom portion of the aircraft 1, or rather on a portion of the latter that, in flight, faces the ground.

The orientation of the camera 2 towards the land areas to be monitored is automatically controlled by the monitoring system as a function of the position of the aircraft 1 in terms of latitude, longitude and altitude. This data is obtained, for example, by means of a GPS positioning system 4 mounted on board the aircraft 1. Other positioning systems capable of providing information on the position of the aircraft 1 may be used indifferently. Regarding the altitude level, it is possible to use commercially available DTED (Digital Terrain Elevation Data) devices for such computations. DTED devices are configured to associate (normally by forming a discrete grid) a measured value of altitude or height above sea level with each latitude and longitude pair (at the points considered in the discrete grid). Once this altitude level is known, the camera 2 is able, in a manner that is in itself known, to correctly point to the objective considered at the chosen coordinates.

According to one aspect of the present invention, a zero (point) or one dimensional (straight line) geometrical element is associated with each land area to be monitored and which approximates the territorial extension along a main axis of the element. For example, a single building can be schematically represented by a point (zero dimension), while a river or a pipeline cam be represented by a simple or closed polygonal chain (one-dimensional) that follows the course of the river or pipeline.

The applicant has verified that when the camera 2 is pointed perpendicularly to the geometrical line (e.g. a simple polygonal chain) that defines the path in the land area to be monitored, the images that are captured are very good in terms of distortion (which is minimal). Even the direct distance (slant range) is minimized in this condition. However, because the flight path of the aircraft 1 can also be planned without taking into account the relative orientation between aircraft 1 (or camera 2) and land area to be monitored, image capture according to the criterion of perpendicularity between observation direction of the camera 2 and the geometrical line that defines the ground path is not always possible.

According to one aspect of the present invention, a method of controlling camera 2 is therefore provided for handling all possible situations of relative orientation between camera 2 and land area to be monitored. The method is performed using processing logic (e.g. a computer or microprocessor) 6 installed on board the aircraft 1 and operatively coupled to the camera 2 (to opportunely control it in terms of orientation and image capture), and to the GPS device 4 of the aircraft 1 (to acquire position data of the aircraft 1).

With reference to Figure 2, a land area 10 is shown that has a pipeline 12 (e.g. an oil pipeline). Hereinafter, reference shall be made in particular, to a pipeline 12. Nevertheless, it is clear that what is described is similarly applicable to any (linear or linearizble) objective to be monitored. In this example, the pipeline 12 is the element that must be monitored by means of the camera 2 of the aircraft 1. To this end, the pipeline 12 is represented geometrically and mathematically as a simple polygonal chain 14, i.e. a line including a plurality of mutually consecutive sub-segments 14a-14c extending in a rectilinear manner between respective vertices A-B-C-D. the first sub-segment 14a is defined as the straight line that joins vertices A and B; the second sub-segment 14b is defined as the straight line that joins vertices B and C; and the third sub-segment 14c is defined as the straight line that joins vertices C and D. Vertices A, B, C and D are chosen at respective changes in direction of the pipeline 12 (i.e. at respective bends in the pipeline 12). It is clear that in the case of abrupt changes in the direction of the pipeline 12 in a very small land area, it is possible to decide not to consider each change of direction as a starting vertex of a new sub-segment, by simply approximating that portion of the pipeline 12 with a straight line that interpolates the vertices associated with each abrupt change of direction.

The land area 10 to be monitored is divided substantially into two sub-areas 10a and 10b, separated from each other by the simple polygonal chain 14. The aircraft 1 must necessarily be flying over one of the two sub-areas (in Figure 2, the aircraft 1 flies over sub-area 10a). According to one aspect of the present invention, it is opportune to check that two mutually consecutive sub-segments 14a-14c do not form, at the point of junction, a respective angle $\alpha$ (angles $\alpha'$ and $\alpha''$ in Figure 2) of less than 90°, where this angle $\alpha$ is measured inside the land sub-area that the aircraft 1 is flying over (in Figure 2, angle $\alpha'$ and $\alpha''$ are inside sub-area 10a). This condition can be checked in the phase of representation of the pipeline 12 by a simple polygonal chain 14. If the pipeline 12 has a path variation forming an angle of less than 90°, the representation thereof by means of sub-segments must take into account the above-mentioned condition, and provide one or more transition sub-segments, each of them forming respective angles greater than 90° with the immediately previous sub-segment and with the immediately next sub-segment, (these angles are always measured inside the land sub-area that the aircraft 1 will fly over, according to the predetermined flight path).

The start of monitoring operations can be controlled automatically or by an operator-provided command.

For example, in the case of automatic starting, monitoring will start when the aircraft 1 is in a certain position with respect to the pipeline 12 to be monitored (this position is provided by the GPS receiver mounted on board the aircraft 1). Alternatively, by knowing the flight path and the time taken by the aircraft 1 to reach the altitude, latitude and longitude in the vicinity of the pipeline 12 to be monitored, the command to commence automatic monitoring could be provided after a certain time interval from when the aircraft 1 took off.

In the case of manual monitoring initiation, the order is given by a ground operator, via a radio link of a type in itself known.

The representation of the pipeline 12 by means of a simple polygonal chain 14, as previously described, is performed using commercially available software (products that handle GIS (Geographic Information System) databases). Alternatively, this representation could be performed by a specialized operator.

Again, with reference to Figure 1, in addition to the computer 6 on board the aircraft 1, a memory 16 including a database is provided and operatively coupled to the computer 6. The database is suitable for storing the information that defines the schematized pipeline 12 as previously described, i.e. via a plurality of sub-segments 14a-14c that form a simple polygonal chain 14. In addition, respective spatial position information, in terms of geographical coordinates (in particular, latitude, longitude and height above sea level), is associated in the database with each sub-segment 14a-14c. Even more specifically, the geographical coordinates (latitude, longitude and possibly altitude) of the vertices that delimit each sub-segment are associated with the corresponding sub-segment 14a-14c, i.e. geographical coordinates of vertices A and B for sub-segment 14a; geographical coordinates of vertices B and C for sub-segment 14b; and geographical coordinates of vertices C and D for sub-segment 14c. Based on the latitude and longitude information of each vertex, it is easily possible to obtain information concerning the spatial extension of the associated sub-segment.

It is evident that the database can contain a plurality of information items (in the form of sub-segments forming respective simple polygonal chains) associated with a plurality of targets to be monitored other than the pipeline 12; for example, as mentioned, land areas, buildings, infrastructures, rivers, coastal areas, roads, oil pipelines, etc.

When monitoring is manually initiated, the ground operator select a simple polygonal chain 14 from those present in the database and the phase of tracking/tracing this simple polygonal chain 14 by the camera 2 commences, according to the present invention.

When monitoring is automatically initiated, the selection of a simple polygonal chain from those present in the database is performed automatically, on the basis of preset data (i.e. depending on the mission that the aircraft 1 is performing) and the relative position between the aircraft 1 and the simple polygonal chain 14. In particular, based on a simple polygonal chain 14 from those present in the database (for example, the simple polygonal chain 14 is preset in the phase of mission definition) and the position coordinates of the aircraft 1 (obtained from the GPS device 4), the processing logic 6 automatically selects a sub-segment 14a-14c of the simple polygonal chain 14 from which to start the image acquisition procedure. Sub-segment 14a-14c is selected as explained below.

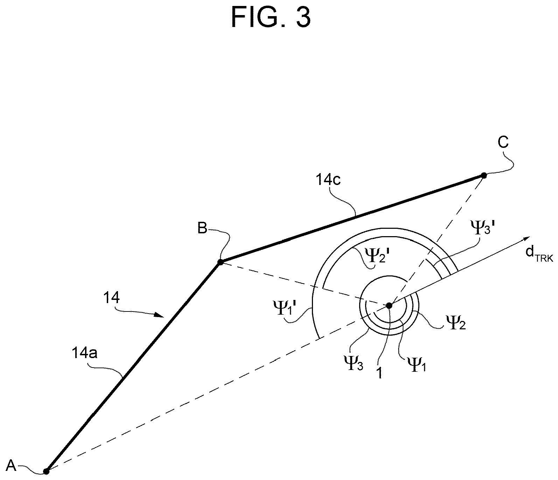

Upon receiving the command to start monitoring, the processing logic 6 controls the camera 2 automatically so as to point it towards one of the sub-segments 14a-14c of the simple polygonal chain 14, to initiate image acquisition. The orientation of the camera 2 depends on the position of the aircraft 1. Based on information regarding the relative geographic position between the aircraft 1 and each sub-segment 14a-14c (the geographic position of which is stored in the database of the memory 16 in terms of geographical coordinates of the start and end vertices of each sub-segment 14a-14c), the processing logic 6 identifies which sub-segment 14a-14c satisfies the condition whereby at least one vertex A-D "lies ahead of" the aircraft 1; in other words, given a flight direction $d_{TRK}$ of the aircraft 1, the coordinates of the vertex A-D that "lies ahead of" the aircraft 1 are such that the aircraft 1 has not yet reached or gone beyond this vertex A-D during its flight. With reference to Figure 3, where only vertices A-C of the simple polygonal chain 14 in Figure 2 are shown for simplicity (i.e. only sub-segments 14a and 14b), a vertex A-C is rejected when a respective angle $\Psi$ (three angles $W_1$-$W_3$ are shown in Figure 3) has a value between 90° and 270°.

Angle $\Psi$ is the angle between the flight (or track) direction $d_{TRK}$ of the aircraft 1 at the instant considered and the (ideal) straight line that connects the aircraft 1 with the vertex A-C considered, turning in a clockwise direction. For these purposes, the aircraft 1 is also schematized as a "point", the geographical coordinates of which are the coordinates provided by the GPS device 4.

According to a different point of view, a respective vertex A-C is considered to "lie ahead of" the aircraft 1 if angle $\Psi'$=360°-$\Psi$, between direction $d_{TRK}$ and the straight line that connects the aircraft 1 with the vertex A-C considered, is less than 90° or greater than 270°. Angle $\Psi'$ is the angle travelled by the vector that indicates direction $d_{TRK}$ when turned in an anticlockwise direction until reaching the straight line that connects the aircraft 1 with the vertex A-C considered. In Figure 3, three angles $\Psi_1'$=360°-$\Psi_1$, $\Psi_2'$=360°-$\Psi_2$ and $\Psi_3'$=360°-$\Psi_3$ are shown.

Still with reference to Figure 3, vertices A and B do not satisfy the condition whereby the respective angle $\Psi_1$ and $\Psi_2$ is inside the range 90°-270°. Instead, vertex C satisfies this condition, as angle $\Psi_3$ between direction $d_{TRK}$ and the straight line that connects the aircraft 1 to vertex C is greater than 270° (i.e. $\Psi_3'$ is the only angle less than 90°). After having identified a vertex A-D that satisfies this condition (here, C), the successive vertices (i.e. the vertices following C when considered along the flight direction $d_{TRK}$ (here, vertex D) are not evaluated. Monitoring via the camera 2 starts from the segment defined between the identified vertex (vertex C) and the immediately preceding vertex (vertex B), i.e. sub-segment 14b.

Once the sub-segment from which to start monitoring has been identified, the pointing of the camera 2 depends on the reciprocal position between the aircraft 1 and the sub-segment 14b, as explained below.

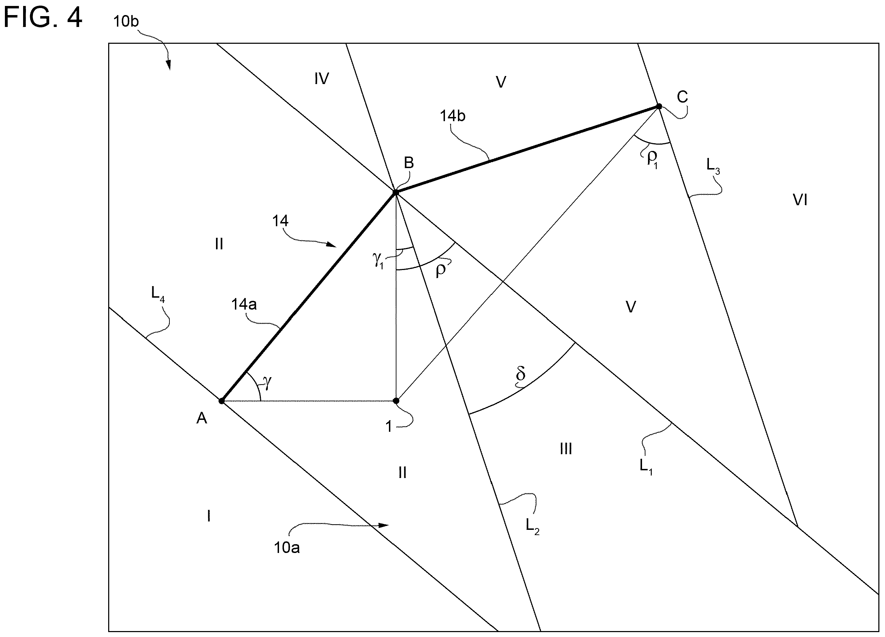

With reference to Figure 4, the spatial area within which the pipeline 12 (schematized by the simple polygonal chain 14) extends is subdivided into a plurality of sub-areas, or zones, identified here by Roman numerals I to VI. Each sub-segment 14a-14b extends in a respective zone I-VI; however, the opposite does not occur and some zones I-VI do not include any sub-segment 14a-14c. Similarly to Figure 3, only sub-segments 14a and 14b are shown in Figure 4 for simplicity of representation.

The procedure to delimit the various zones I-VI is as follows (similarly to that previously described, the aircraft 1 is schematized by a point, the geographical coordinates of which are known from the GPS device 4):

- angle $\gamma$ is defined as the angle between sub-segment 14a and the straight line passing between the aircraft 1 and vertex A (with $\gamma$ between +180° and -180°);
- angle $\rho$ is defined as the angle between a straight line $L_1$ (where $L_1$ is orthogonal to sub-segment 14a and passes through vertex B) and the straight line passing between the aircraft 1 and vertex B (with $\rho$ between +180° and -180°);
- angle $\gamma_1$ is defined as the angle between a straight line $L_2$ (where $L_2$ is orthogonal to sub-segment 14b and passes through vertex B) and the straight line passing between the aircraft 1 and vertex B (with $\gamma_1$ between +180° and -180°);
- angle $\rho_1$ is defined as the angle between a straight line $L_3$ (where $L_3$ is orthogonal to sub-segment 14b and passes through vertex C) and the straight line passing between the aircraft 1 and vertex C (with $\rho_1$ between +180° and -180°).

In greater detail, angle $\gamma$ is inside the triangle formed by the straight lines that connect the aircraft 1 with vertices A and B and by sub-segment 14a, i.e. angle $\gamma$ extends completely within sub-area 10a. Similarly, angles $\gamma_1$, $\rho$, $\rho_1$ and $\delta$ also extend completely within sub-area 10a.

The subdivision of the land area 10 into zones I-VI is performed as described below.

Zone II is the area that comprises sub-segment 14a and is defined as follows: in sub-area 10a, zone II is the zone between straight line $L_4$ orthogonal to sub-segment 14a at vertex A and straight line $L_2$; in sub-area 10b, zone II is the zone between straight line $L_4$ and straight line $L_1$.

Zone V is the area that comprises sub-segment 14b and is defined as follows: in sub-area 10a, zone V is the zone between straight line $L_1$ and straight line $L_3$; in sub-area 10b, zone V is the zone between straight line $L_2$ and straight line $L_3$.

Zone III is the area comprised between straight line $L_1$ and straight line $L_2$ in sub-area 10a.

Zone IV is the area between straight line $L_1$ and straight line $L_2$ in sub-area 10b.

Zone I is the area external to the areas subtended by sub-segments 14a and 14b, and is only delimited by straight line $L_4$.

Zone VI is the area external to the areas subtended by sub-segments 14a and 14b, and is delimited by straight line $L_3$ (and $L_1$).

Orientation of the camera 2 varies depending on the zone I-VI in which the aircraft 1 is flying. In particular, the operating mode of the camera 2 changes according to the following table (1).

Table (1)

| $\gamma$ | $\rho$ | $\gamma_1$ | $\rho_1$ | zone | mode | segment | vertex |
|---|---|---|---|---|---|---|---|
| $|\gamma| \geq 90°$ | - | $\geq 0°$ | - | I | Fix | | A |
| $|\gamma| < 90°$ | $\geq 0°$ | $\geq 0°$ | - | II | Leg | 14a | |
| - | $\geq 0°$ | $< 0°$ | - | III | Int | | |
| - | $< 0°$ | $\geq 0°$ | - | IV | Fix | | B |
| - | $< 0°$ | $< 0°$ | $\geq 0°$ | V | Leg | 14b | |
| - | $< 0°$ | - | $< 0°$ | VI | Fix | | C |

In zones I and IV, the camera 2 is operated in "Fix" mode, whereby it is controlled so as to point in a fixed mode to a respective vertex (i.e. the vertex located "ahead of" the aircraft 1, based on the current coordinates of the aircraft 1, the coordinates of the vertex considered and the flight direction of the aircraft 1, as described with reference to Figure 3). Only in the case of zone VI, considering vertex C as the last vertex to be monitored and a flight direction away from zone V, is the camera 2 pointed "backwards" from the aircraft 1, pointing in fixed mode to vertex C. This is not applicable in the case where there are other sub-segments to be monitored after vertex C.

In the case where the aircraft 1 is in zone I and has a flight direction $d_{TRK}$ towards zone II (or in the opposite direction, away from zone II, and assuming that there are no further sub-segments to be monitored), then the camera 2 is pointed in fixed mode to vertex A.

In the case where the aircraft 1 is in zone VI and has a flight direction $d_{TRK}$ towards zone V (or in the opposite direction, away from zone V, and assuming that there are no further sub-segments to be monitored), then the camera 2 is pointed in fixed mode to vertex C.

In the case where the aircraft is in zone IV (i.e. at the end of monitoring a sub-segment 14a or 14b), the camera 2 is pointed towards vertex B independently of the flight direction $d_{TRK}$.

It should be noted how the above-mentioned zones I, IV and VI are such that when the aircraft 1 is in one of them, the camera 2 is not able to point perpendicularly onto any sub-segment 14a, 14b. Instead, if the aircraft 1 is in one of the other zones, then it is possible to point perpendicularly onto one of sub-segments 14a, 14b. This last condition is preferred with respect to pointing to a vertex and therefore has precedence.

When the aircraft 1 is in zone II or V, the camera 2 is controlled in "Leg" mode, whereby the camera 2 is in the condition of being able to point perpendicularly onto one of the respective sub-segments 14a (for zone II) or 14b (for zone V).

The control logic 6 controls the pointing of the camera 2 in "Leg" mode based on the following data:

- latitude $LAT_A$ and longitude $LON_A$ of vertex A and latitude $LAT_B$ and longitude $LON_B$ of vertex B for acquiring images of sub-segment 14a;
- latitude $LAT_B$ and longitude $LON_B$ of vertex B and latitude $LAT_C$ and longitude $LON_C$ of vertex C for acquiring images of sub-segment 14b;
- latitude $LAT_V$ and longitude $LON_V$ of the aircraft 1;
- discretization step "d", the definition of which is required by this method and which denotes the ground spacing of the discrete points towards which the camera 2 will be pointed between the vertices of the sub-segments (e.g. A and B).

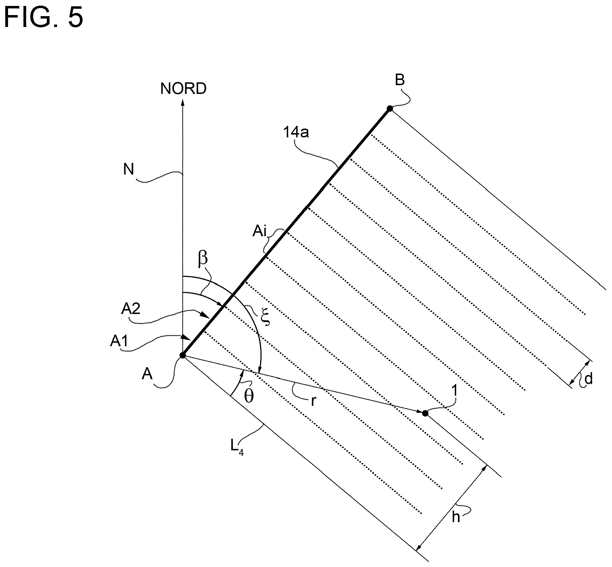

To determine the coordinates of the point to be monitored, the control logic 6 performs the procedure described with reference to Figure 5 (referring to sub-segment 14a in particular).

With reference to Figure 5, sub-segment 14a, delimited by vertices A-B, is subdivided into a plurality $N_A$ of discrete portions $A_i$, each of which has a length given by the discretization step $\underline{d}$. The number $N_A$ of discrete portions $A_i$ is given by $\underline{AB}/d$ (where $\underline{AB}$ is the length of sub-segment 14a).

Knowledge of the geographical coordinates of vertices A and B allows computing, in a known manner, the value of length $\underline{AB}$, as well as the value of angle $\beta$ between sub-segment 14a and the geographical north direction (arrow N in Figure 5).

A known method for computing the value of length $\underline{AB}$ is provided, for example, by T. Vincenty, "Direct and Inverse Solutions of Geodesics on the Ellipsoid with Application of Nested Equations", Survey Review, vol. 23, no. 176, April 1975, pp. 88-93.

The same method can be used to compute, based on the geographical coordinates of vertex A and of the aircraft 1, the value of (rectilinear) distance r between vertex A and the current position of the aircraft 1, as well as the value of angle $\xi$ between the north direction and straight line r.

Distance h is then calculated, which is the length of the straight line between vertex A and the projection of the point where the aircraft 1 is located onto sub-segment 14a. The angle $\theta$ between the straight line L4 (orthogonal to sub-segment 14a and passing through vertex A) and straight line r is calculated as follows:

$$\theta = 90° - (\xi - \beta)$$

Distance h is calculated as follows:

$$h = r \cdot \sin(\theta).$$

The value of h thus calculated enables determining which of the three discrete portions $A_i$ must be observed via the camera 2. Given the value taken by h, the following conditions should be noted:

- $h \leq 0$, then we are in an area in which the camera 2 is operated in "Fix" mode, pointing to vertex A (zone I);
- $0 < h < \underline{AB}$, then $A_i$ corresponds to $(h/d)+1$ (in the event of h/d being a decimal number, only the integer part is considered);
- $h \geq \underline{AB}$, then we are in an area in which the camera 2 is operated in "Fix" mode pointing to vertex B (in the case where B corresponds to the last vertex of the line to observe).

In the situation where $0<h<\overline{AB}$: $A_i=A_1=1$ is the first discrete portion starting from vertex A; $A_i=A_2=2$ is the second discrete portion starting from vertex A; and so on, where $A_i=A_M=M$ is the M'th discrete portion starting from vertex A. The value of $A_i$ thus calculated is used to calculate the value of distance $\overline{AA_i}$ between vertex A and the midpoint of the associated discrete portion $A_i$ as follows:

$$\underline{AA_i}=d \cdot A_i-d/2,$$

where the median point of each discrete portion $A_i$, as identified by the spatial position of the respective discrete portion $A_i$, is considered.

It is then possible to calculate the coordinates of the point to be monitored, or rather the point for which it desired to capture one or more images or video via the camera 2. In particular, the latitude $LAT_{Ai}$ and longitude $LON_{Ai}$ of the discrete portion $A_i$ to be monitored are based on the values of latitude $LAT_A$ and longitude $LON_A$ of vertex A, the value of angle $\beta$ and the value of distance $\overline{AA_i}$.

The known method by T. Vincenty, "Direct and Inverse Solutions of Geodesics on the Ellipsoid with Application of Nested Equations" can be used to calculate the value of distance $\overline{AA_i}$. The same method also enables expressing the latitude $LAT_{Ai}$ and longitude $LON_{Ai}$ of discrete portion $A_i$ as a function of vertex A, the value of angle $\beta$ and the value of distance $\overline{AA_i}$.

Again, with reference to the table (1), zone III is an intermediate zone in which the camera operates in "Int" mode. This zone is a transition area between zones II and V in which the camera 2 operates in "Leg" mode. When the aircraft 1 is in zone III, the camera 2 is controlled so as to acquire images of both sub-segment 14a and sub-segment 14b at an increased rate. In fact, in zone III the condition of perpendicularity between the direction of orientation of the camera 2 and the sub-segments 14a and 14b occurs for both sub-segments 14a and 14b.

The definition of the zones allows extending the concept of improved observability of the ground line, including those areas of land in which the above-mentioned perpendicularity condition is not guaranteed, or those in which it is satisfied by several segments of the ground line (as happens, for example, in zone III). The image acquisition rate depends on the position of the aircraft (and consequently on its ground speed), and is therefore constant in the case of an aircraft that moves in space with uniform motion. In the areas of zones where perpendicularity is not satisfied, the camera is controlled to constantly frame the point nearest the aircraft. Instead, in zones where perpendicularity is satisfied by several points, the image acquisition rate is increased to allow observation of entire segments of the line (e.g. both sub-segments 14a and 14b).

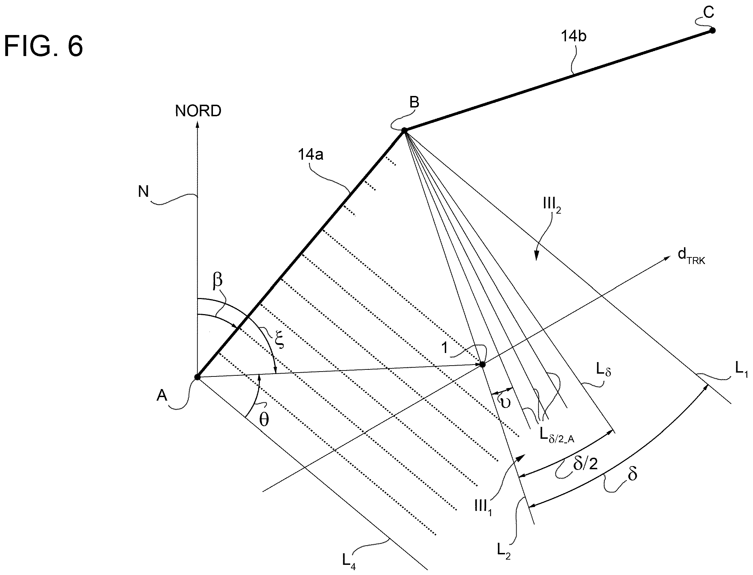

With reference to Figure 6, the value of angle $\delta=\rho-\gamma_1$ (i.e. the angle between $L_1$ and $L_2$) is given by the absolute value of the difference $\delta=\rho-\gamma_1$. It should be noted that the difference $\delta=\rho-\gamma_1$ is positive for the situation shown in Figure 6, where angle ABC (with vertex on B inside sub-area 10a) is less than 180°. Whereas if the opposite case is considered, in which angle ABC (always with vertex on B inside sub-area 10a) is greater than 180°, the difference $\delta=\rho-\gamma_1$ is negative. The angular size of the intermediate zone ($\delta$) is therefore the absolute value of the difference in orientation of the two successive segments (AB and BC) correlated with angles $\rho$ and $\gamma_1$.

Zone III is divided in half, into two sub-areas in which the first subzone $III_1$ is comprised between straight line $L_2$ and straight line $L_\delta$ that divides angle $\delta$ in half, and the second subzone $III_2$ is comprised between straight line $L_1$ and straight line $L_\delta$.

To determine the coordinates of the point to be monitored, when the aircraft 1 enters subzone $III_1$ from zone II, the following procedure is used.

When entering zone III, the number of discrete portions $A_i$ (of sub-segment 14a) already passed over and monitored is known. The remaining discrete portions $A_i$ of sub-segment 14a still to be monitored must be monitored (i.e. their respective images must be captured by the camera 2) until the aircraft 1 is in subzone $III_1$ of zone III. By dividing $\delta/2$ by the number of remaining discrete portions $A_i$, it is possible to determine the magnitude $\nu$ of the radial sectors of subzone $III_1$ within which the camera must be controlled in order to capture an image for each of the remaining discrete portions $A_i$, in order to complete the monitoring of sub-segment 14a. In other words, subzone $III_1$ is subdivided into a plurality of radial sectors, each one of them defined by respective lines $L_{\delta/2\_A}$, that the aircraft 1 passes over during its flight. The passage of pointing the camera 2 from a discrete portion $A_i$ to a successive discrete portion $A_{i+1}$ corresponds to the transition from one radial sector to another in subzone $III_1$.

In order to identify the radial sector where the aircraft is flying, and consequently the point $A_i$ to be monitored, the following procedure is used. The value of angle $\mu$ is calculated, defined as the angle between the straight line $L_2$ and the straight line $r_B$ passing between the aircraft 1 and vertex B (in the case shown in Figure 6, straight line $r_B$ is superimposed on $L_2$). Mathematically, angle $\mu$ is calculated in the following manner:

- $\mu=-\gamma_1$ if the azimuth of segment AB with respect to north is less than the azimuth of segment BC with respect to north (the case of Figure 6); and $\mu=180°-|\gamma_1|$ if the azimuth of AB with respect to north is greater than the azimuth of segment BC with respect to north.

In order to calculate the radial sector in which the aircraft 1 is flying, the following procedure is used: angle $\mu$ (a function of the aircraft's current position) is divided by the magnitude of each radial sector $\nu$ (a function of the line's geometry); the integer value of the result corresponds to the index "i" indicating the point $A_i$ to be monitored. Specifically:

$$i=int(\mu/ \nu),$$

where "int" indicates the operation by which the decimal digits deriving from the division operation are discarded and only the integer part is considered.

With reference to Figure 6, it is not possible to acquire images perpendicularly to each sub-segment $A_i$ in any radial sector of subzone $III_1$. Images are only acquired perpendicularly in "Leg" zones.

Reaching straight line $L_\delta$ corresponds to the aircraft 1 completing angle $\delta/2$, and also corresponds to entering subzone $III_2$.

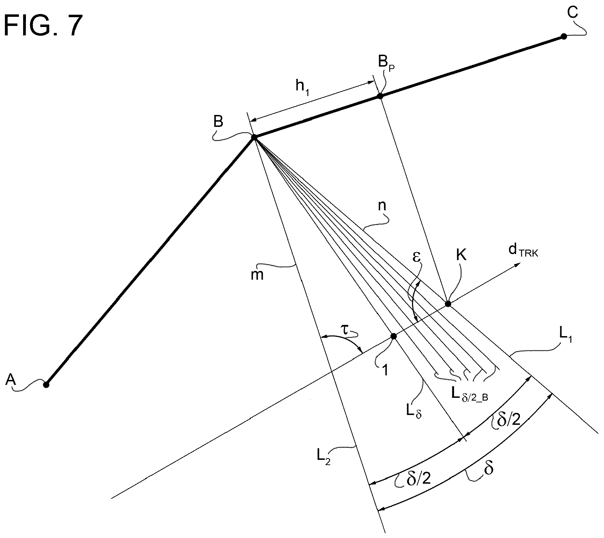

Entry of the aircraft 1 in subzone $III_2$ corresponds to the start of monitoring sub-segment 14b. Similarly to that described with reference to Figure 5, sub-segment 14b is also discretized into a plurality of discrete portions $B_i$ having the same spatial extension "d" (discretization step). Subzone $III_2$ is subdivided into a plurality of radial sectors, each one of them defined by respective lines $L_{\delta/2\_B}$, which the aircraft 1 will cross during its flight (Figure 7). The passage of pointing the camera 2 from a discrete portion $B_i$ to a successive discrete portion $B_{i+1}$ corresponds to the transition from one radial sector to another in subzone $III_2$. The projection of the aircraft 1 on sub-segment 14b at the exit from zone III / entry to zone V is not known beforehand and depends on the course followed by the aircraft 1. In consequence, the discrete portion $B_i$ that the camera 2 must point to (perpendicularly) upon exit from zone III / entry to zone V is also unknown. To this end, an approximation is performed whereby it is assumed that the aircraft 1 flies on a course in subzone $III_2$ having a direction corresponding to the flight direction assumed on passage from subzone $III_1$ to subzone $III_2$. It is thus possible to determine a geographic position K beforehand, corresponding to the passage from zone III to zone V, which corresponds to point $B_p$ projected on sub-segment 14b.

The procedure to calculate the coordinates of the point $B_p$ of sub-segment 14b to be monitored upon entry to subzone $III_2$ is as follows.

The distance "m" between vertex B and the position that the aircraft 1 has assumed on straight line $L_2$, namely upon entering subzone $III_1$, is calculated. This operation is possible on the basis of the latitude and longitude values of vertex B (known) and those assumed by aircraft 1 (known via the GPS device 4 and stored in memory 16).

Then, values are calculated for angles $\tau$ and $\varepsilon$, respectively formed by the intersection of straight line $L_2$ with the direction (assumed straight at the point of intersection) of the aircraft 1 and by the intersection of straight line $L_1$ with the direction (assumed straight at the point of intersection) of the aircraft 1. Since $m/\sin(\varepsilon)=n/\sin(\tau)$, the distance "n" between vertex B and the point K of assumed transition from zone III to zone V is given by the following relation:

$$n = m\cdot[\sin(\tau)/\sin(\varepsilon)].$$

The distance $h_1$ between vertex B and point $B_p$ on sub-segment 14b is given by:

$$h_1=n\cdot\sin(\delta),$$

Distance $h_1$ comprises a number of discrete portions $B_i$, given by $h_1/b$. In the case where the operation $h_1/b$ supplies a decimal number, only the integer part is considered. The number of discrete portions $B_i$ thus obtained represents the discrete portions $B_i$ that must be monitored in subzone $III_2$, within angle $\delta/2$. The width, measured along the assumed flight direction $d_{TRK}$, of each radial sector in subzone $III_2$ is obtained by dividing $\delta/2$ by the number of discrete portions $B_i$, given by $h_1/b$ (considering only the integer part).

From Figure 6 it can be noted that, in subzones $III_1$ and $III_2$, the permanence of the aircraft in each radial sector is shorter than its permanence in the discrete portions $A_i$ (and, similarly, $B_i$), as, especially near segments 14a and 14b, each radial sector is "narrower" with respect to the discrete portions $A_i$ ($B_i$). It is therefore evident that in subzones $III_1$ and $III_2$, the image acquisition rate of the camera 2 is greater than the image acquisition rate in zones II and V. Furthermore, depending on the flight direction of the aircraft, the image acquisition rate in subzone $III_1$ can be different (greater in the example in Figure 6) from that in subzone $III_2$.

After leaving zone III, the aircraft 1 enters zone V. Zone V is similar to zone I and directing the camera 2 orthogonally to the discrete portions $B_i$ takes place in a similar manner to that described with reference to zone I, Figure 5.

There is a special condition when the monitoring method is started while the aircraft 1 is in an intermediate zone "Int", for example, in zone III. In fact, in this event, the camera 2 must be controlled to scan a final part of the sub-segment 14a (close to vertex B) in the case where the aircraft is in subzone $III_1$, or scan an initial part of sub-segment 14b (close to vertex B) in the case where the aircraft is in subzone $III_2$.

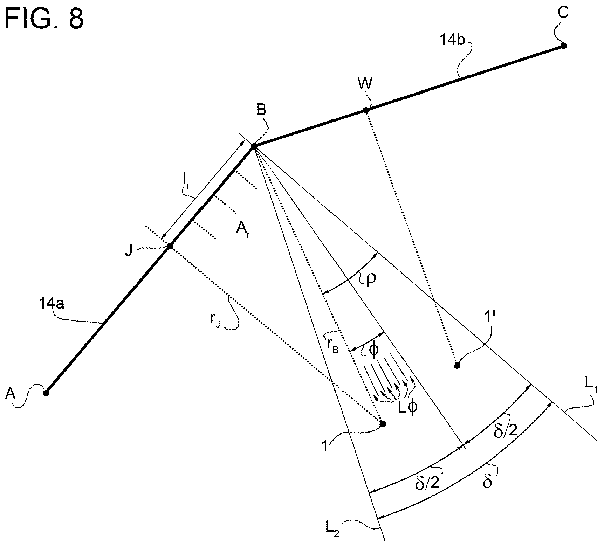

As shown in Figure 8, when the aircraft 1 is in subzone $III_1$ and receives the command to start monitoring in this subzone $III_1$, the control logic 6 operates as follows.

The angle $\Phi$, which is the angle between straight line $r_B$ (which connects the aircraft 1 with vertex B) and straight line $L_\delta$, is calculated as follows:

$$\Phi = \rho - \delta/2,$$

where $\rho$ (see Figure 4) is the angle between straight line $L_1$ and the straight line that connects the aircraft 1 with vertex B.

The length $l_r$ of the portion of sub-segment 14a comprised between vertex B and the point J of intersection between sub-segment 14a and a straight line $r_J$ orthogonal to sub-segment 14a and passing through the point where the aircraft 1 is located, is then calculated. The value of $l_r$ is given by:

$$l_r = r_B \cdot \sin(\rho),$$

where $r_B$ is, as stated, the (rectilinear) distance between the aircraft 1 and vertex B.

Then, the number $N_{Ai}$ of discrete portions $A_i$ present within the portion of length $l_r$ of sub-segment 14a is calculated.

This value is obtained as:

$$N_{Ai} = int(l_r/d),$$

where "int" indicates the operation by which the decimal digits deriving from the division operation are discarded and only the integer part is considered.

Furthermore, by dividing the value of angle $\Phi$ by the value of $N_{Ai}$ it is possible to calculate the angular distance $\Phi_1$ covered by the aircraft 1 in each radial sector $L_\Phi$. When the aircraft 1 is in one of the radial sectors $L_\Phi$, the camera 2 will be controlled to capture images of a respective discrete portion $A_i$. In other words, one and only one discrete portion $A_i$ to be monitored is associated with each radial sector $L_\Phi$. The first radial sector $L_\Phi$ starting from straight line $r_B$ is associated with the first discrete portion $A_i$ starting from point J, the second radial sector $L_\Phi$ starting from straight line $r_B$ is associated with the second discrete portion $A_i$ starting from point J, and so on. The aircraft passes from one radial sector $L_\Phi$ to the next radial sector $L_{\Phi+1}$ every "$\Phi_1$" degrees, until straight line $L_\delta$ is reached, i.e. until $\rho = \delta/2$. The passage from subzone $III_1$ to subzone $III_2$ is handled as already described with reference to Figure 7.

There is a further special condition when the monitoring method is started while the aircraft 1 is in subzone $III_2$ of intermediate zone III. In this event, the camera 2 is controlled to scan sub-segment 14b.

As shown in Figure 8, when the aircraft 1 is in subzone $III_2$ (in this case, the aircraft is identified by reference numeral 1') and receives the command to start monitoring in this subzone $III_2$, the control logic 6 operates as follows.

The coordinates are calculated for point W, given by the projection onto sub-segment 14b of the point where the aircraft 1' is located (i.e. the coordinates of the point W of intersection of sub-segment 14b with a straight line orthogonal to sub-segment 14b and passing through the point where the aircraft 1' is located). The monitoring of sub-segment 14b starts at this point W, proceeding towards vertex C in a similar manner to that already described with reference to Figures 5, i.e. for a "Leg" zone.

It is evident from the description that the method according to the present invention represents a significant evolution with respect to that reported in the literature and known in the state of the art.

In particular, the system and the method according to the present invention enable complete automation of the monitoring procedures performed by an aircraft with or without a pilot, always ensuring the best camera angle for image capture. Furthermore, the automation inherent in the method of the present invention enables reducing the workload of the operator responsible for managing the camera. With this method, the controls that must be handled by the operator (if available) will mainly concern selection of the optics to use for monitoring (for example, electro-optics or infrared) and setting up the zoom. Finally, as the monitoring method described is not constrained by the path (planned or otherwise) flown by the aircraft, but depends only on the geographic position of the aircraft, the operator will have flexibility in altering the flight path according to mission conditions without having to worry about the pointing of the camera 2. In this way, the operator can concentrate on the analysis and interpretation of the images acquired during monitoring.

Moreover, within the field of unmanned aerial vehicles, automation is a key element tightly bound to the technological maturity of the system. On the other hand, the low costs of these aircraft are one of the fundamental factors that have resulted in their development and which could contribute in the future to establishing their diffusion both in the civil field and in the military field. In fact, unlike traditional aircraft, the operative flexibility could give rise to solutions where, for example, an operator becomes responsible both for handling the aircraft and the available sensors. Other solutions aim at having just one operator capable of simultaneously managing several aircraft or several sensors (of one or more aircraft). The method described in the present invention is able to contribute to achieving these objectives.

**Claims**

1. A system for monitoring linear ground objectives (12), configured to be installed on an aircraft (1) adapted to fly over a geographic area (10), comprising:

   - an image and/or video capture device (2) that can be operatively coupled to said aircraft (1);
   - a positioning device (4) suitable for being installed on the aircraft (1) and configured to provide first geographical coordinates ($LAT_V$, $LON_V$) of said aircraft (1) identifying a current position of the aircraft (1) along a flight path direction ($d_{TRK}$);
   - a memory (16) storing second ($LAT_A$, $LON_A$), third ($LAT_B$, $LON_B$) and fourth ($LAT_C$, $LON_C$) predetermined geographical coordinates of at least a first (A), a second (B) and a third (C) ground location respectively, said second and third geographical coordinates defining respective vertices (A, B) of a first straight objective (14a) to be monitored, and said third and fourth geographical coordinates defining respective vertices (B and C) of a second straight objective (14b), contiguous with the first straight objective, to be monitored such that the first and the second straight objectives (14a and 14b) form a simple polygonal chain (14);
   - processing logic (6) operatively connected to the capture device (2), the positioning device (4) and the memory (16), and configured to:

      (i) acquire, from the positioning device (4), the first geographical coordinates identifying a current position of the aircraft along said flight path direction ($d_{TRK}$);
      (ii) acquire, from the memory (16), the second, the third and the fourth predetermined geographical coordinates;
      (iii) subdivide the geographic area (10) into a first and a second geographic sub-area (10a and 10b) separated from each other by said simple polygonal chain (14);
      (iv) determine if a first ideal straight line exists, the first ideal straight line passing through the first geographical coordinates and orthogonally intersecting the first straight objective (14a);
      (v) if said first ideal straight line exists, then direct said capture device (2) towards the first straight objective along the direction defined by said first ideal straight line, otherwise perform operation (vi) to
      (vi) determine a second ideal straight line that passes through the first geographical coordinates and orthogonally intersects the second straight objective, and direct said capture device (2) towards the second straight objective along the direction defined by said second ideal straight line,

   **characterized in that** the processing logic (6) is further configured to define a first operating area (II) associated with the first straight objective (14a), a second operating area (V) associated with the second straight objective (14b), and a third operating area (III),
   said first operating area (II) being comprised between a boundary line $L_4$ orthogonal to the first straight objective (14a) and passing through the second geographical coordinates ($LAT_A$, $LON_A$), and a boundary line $L_1$ orthogonal to the first straight objective (14a) and passing through the third geographical coordinates ($LAT_B$, $LON_B$),
   said second operating area (V) being comprised between a boundary line $L_2$ orthogonal to the second straight objective (14b) and passing through the third geographical coordinates ($LAT_B$, $LON_B$), and a boundary line $L_3$ orthogonal to the second straight objective (14b) and passing through the fourth geographical coordinates ($LAT_C$, $LON_C$), and
   said third operating area (III) being comprised between boundary line $L_2$ and boundary line $L_1$ and being defined by the partial overlapping of the first and second operating areas, wherein the processing logic (6) is further configured to:

      • control said capture device (2) to acquire images associated with the first straight objective (14a) at a first acquisition rate when the aircraft (1) flies over said first operating area (II), but not said third operating area (III);
      • control said capture device (2) to acquire images associated with the second straight objective (14b) at a second acquisition rate when the aircraft (1) flies over said second operating area (V), but not said third operating area (III); and
• control said capture device (2) to acquire images associated with both the first straight objective (14a) and the second straight objective (14b) at a third acquisition rate, greater than the first and the second acquisition rates, when the aircraft (1) flies over said third operating area (III).

2. A monitoring system according to claim 1, wherein the processing logic (6) is further configured to:

subdivide the first straight objective (14a) into a plurality of first straight sub-segments ($A_i$);
subdivide the second straight objective (14b) into a plurality of second straight sub-segments ($B_i$); and
periodically update the first geographical coordinates of the aircraft along said route by means of the positioning device (4),
said steps of determining if the first ideal straight line or the second ideal straight line exists being carried out at each first or, respectively, second straight sub-segment ($A_i$ or $B_i$).

3. A monitoring system according to claim 1 or 2, wherein operation (iv) includes:

computing respective first and second intermediate straight lines, each of them passing through a point defined by the first geographical coordinates ($LAT_V$, $LON_V$) and through a respective point (A, B) identified by the second ($LAT_A$, $LON_A$) and third ($LAT_B$, $LON_B$) geographical coordinates; and
determining if at least one of said first and second intermediate straight lines forms at least a respective angle of less than 90° with the flight path direction ($d_{TRK}$) and, if so, determining said first ideal straight line.

4. A monitoring system according to any of the preceding claims, wherein operation (vi) includes:

computing a third intermediate straight line passing through a point identified by the first geographical coordinates ($LAT_V$, $LON_V$) and a point (C) identified by the fourth geographical coordinates ($LAT_C$, $LON_C$);
verifying whether the third intermediate straight line forms at least an angle of less than 90° with the flight path direction ($d_{TRK}$) and, if so,
determining said second ideal straight line.

5. A monitoring system according to any one of the preceding claims, wherein the processing logic (6) is further configured to:

control said capture device (2) to acquire images associated with the first straight objective (14a) at an acquisition rate greater than the first acquisition rate when the aircraft (1) flies over a first portion ($III_1$), contiguous with the first operating area, of said third operating area (III); and
control said capture device (2) to acquire images associated with the second straight objective (14b) at an acquisition rate greater than the second acquisition rate when the aircraft (1) flies over a second portion ($III_2$), contiguous with said first portion ($III_1$), of said third operating area (III).

6. A monitoring system according to any one of the preceding claims, wherein, when the aircraft (1) flies over the first geographic sub-area (10a), the processing logic (6) is further configured to:

compute the value of an angle $\gamma$ between the first straight objective (14a) and the first intermediate straight line and extending only in the first geographic sub-area (10a);
compute the value of an angle $\rho$ between boundary line $L_1$ and the second intermediate straight line and extending only in the first geographic sub-area (10a);
compute the value of an angle $\gamma_1$ between boundary line $L_2$ and the second intermediate straight line and extending only in the first geographic sub-area (10a);
compute the value of an angle $\rho_1$ between boundary line $L_3$ and the third intermediate straight line and extending only in the first geographic sub-area (10a);
compute the value of an angle $\delta$ between boundary line $L_1$ and boundary line $L_2$ and extending only in the first geographic sub-area (10a);
control said capture device (2) so as to acquire images associated with the first straight objective (14a) at the first acquisition rate when the aircraft (1) flies over the first operating area (II), but not the third operating area (III) and when $|\gamma| < 90°$, $\rho \geq 0°$ and $|\gamma_1| \geq 0°$;
control said capture device (2) so as to acquire images associated with the second straight objective (14b) at the second acquisition rate when the aircraft (1) flies over the second operating area (V), but not the third operating area (III) and when $\rho < 0°$, $\gamma 1 < 0°$ and $\rho_1 \geq 0°$;

control said capture device (2) so as to acquire images associated with the first straight objective (14a) at the third acquisition rate when the aircraft (1) flies over the third operating area (III) and when $\rho > \delta/2$;

control said capture device (2) so as to acquire images associated with the second straight objective (14B) at the fourth acquisition rate when the aircraft (1) flies over the third operating area (III) and when $\rho < \delta/2$.

7. A monitoring system according to any one of the preceding claims, wherein the processing logic (6) is further configured to:

define a fourth operating area (IV) in the second geographic sub-area (10b) between boundary line $L_1$ and boundary line $L_2$;

define a fifth operating area (I) in a geographic area external to the first and the second geographic sub-areas (10a and 10b) and delimited by boundary line $L_4$;

define a sixth operating area (VI) in a geographic area external to the first and the second geographic sub-areas (10a and 10b) and delimited by boundary line $L_3$;

control said capture device (2) to acquire images associated with the second ground location (B) when the aircraft (1) flies over said fourth operating area (IV);

control said capture device (2) to acquire images associated with the first ground location (A) when the aircraft (1) flies over said fifth operating area (I); and

control said capture device (2) to acquire images associated with the third ground location (C) when the aircraft (1) flies over said sixth operating area (VI).

8. A system according to any of the preceding claims, further including a device for computing the digital terrain elevation data (DTED) configured to associate with each of said second ($LAT_A$, $LON_A$), third ($LAT_B$, $LON_B$) and fourth ($LAT_C$, $LON_C$) geographical coordinates, a respective height above sea level.

9. A method for monitoring linear ground objectives (12) from an aircraft (1) adapted to fly over a geographic area (10) and comprising: an image and/or video capture device (2); a positioning device (4) configured to provide first geographical coordinates ($LAT_V$, $LON_V$) of said aircraft (1) identifying a current position of the aircraft (1) along a flight path direction ($d_{TRK}$); a memory (16) storing second ($LAT_A$, $LON_A$), third ($LAT_B$, $LON_B$) and fourth ($LAT_C$, $LON_C$) predetermined geographical coordinates of at least a first (A), a second (B) and a third (C) ground location, respectively, said second and third geographical coordinates defining respective vertices (A, B) of a first straight objective (14a) to be monitored, and said third and fourth geographical coordinates defining respective vertices (B, C) of a second straight objective (14b), contiguous with the first straight objective, to be monitored, such that the first and the second straight objectives (14a and 14b) form a simple polygonal chain (14),

said method comprising the steps of:

(i) acquiring, from the positioning device (4), the first geographical coordinates identifying a current position of the aircraft along said flight path direction ($d_{TRK}$);

(ii) acquiring, from the memory (16), the second, third and fourth predetermined geographical coordinates;

(iii) subdividing the geographic area (10) into a first and a second geographic sub-area (10a and 10b) separated from each other by said open simple polygonal chain (14);

(iv) determining if a first ideal straight line exists that passes through the first geographical coordinates and that orthogonally intersects the first straight objective (14a);

(v) if said first ideal straight line exists, then directing said capture device (2) towards the first straight objective along the direction defined by said first ideal straight line, otherwise performing operation (vi) of

(vi) determining a second ideal straight line that passes through the first geographical coordinates and that orthogonally intersects the second straight objective and directing said capture device (2) towards the second straight objective along the direction defined by said second ideal straight line,

**characterized in that** it further comprises the step of defining a first operating area (II) associated with the first straight objective (14a), a second operating area (V) associated with the second straight objective (14b), and a third operating area (III),

said first operating area (II) being comprised between a boundary line $L_4$ orthogonal to the first straight objective (14a) and passing through the second geographical coordinates ($LAT_A$, $LON_A$), and a boundary line $L_1$ orthogonal to the first straight objective (14a) and passing through the third geographical coordinates ($LAT_B$, $LON_B$),

said second operating area (V) being comprised between a boundary line $L_2$ orthogonal to the second straight objective (14b) and passing through the third geographical coordinates ($LAT_B$, $LON_B$), and a boundary line $L_3$ orthogonal to the second straight objective (14b) and passing through the fourth geographical coordinates ($LAT_C$, $LON_C$), and

said third operating area (III) being comprised between boundary line $L_2$ and boundary line $L_1$ and being defined by the partial overlapping of the first and second operating areas, the method further comprising the steps of:

- controlling said capture device (2) to acquire images associated with the first straight objective (14a) at a first acquisition rate when the aircraft (1) flies over said first operating area (I), but not said third operating area (III);
- controlling said capture device (2) to acquire images associated with the second straight objective (14b) at a second acquisition rate when the aircraft (1) flies over said second operating area (V), but not said third operating area (III); and
- controlling said capture device (2) to acquire images associated with the first straight objective (14a) at a third acquisition rate, greater than the first and the second acquisition rates, when the aircraft (1) flies over said third operating area (III).

**10.** A monitoring method according to claim 9, further comprising the steps of:

subdividing the first straight objective (14a) into a plurality of first straight sub-segments ($A_i$);
subdividing the second straight objective (14b) into a plurality of second straight sub-segments ($B_i$); and
periodically updating the first geographical coordinates of the aircraft along said flight path direction by means of the positioning device (4),
said steps of determining if the first ideal straight line or the second ideal straight line exists being periodically carried out at each first or, respectively, second straight sub-segment ($A_i$, $B_i$).

**11.** A monitoring method according to claim 9 or 10, wherein step (iv) includes:

computing respective first and second intermediate straight lines passing through a point identified by the first geographical coordinates ($LAT_V$, $LON_V$) and through a respective point (A, B) defined by the second ($LAT_A$, $LON_A$) and, respectively, the third ($LAT_B$, $LON_B$) geographical coordinates; and
determining if at least one of said first and second intermediate straight lines forms at least a respective angle of less than 90° with the flight path direction ($d_{TRK}$) and, if so, determining said first ideal straight line.

**12.** A monitoring method according to any of claims 9-11, wherein step (vi) includes:

computing a third intermediate straight line passing through a point identified by the first geographical coordinates ($LAT_V$, $LON_V$) and a point (C) identified by the fourth geographical coordinates ($LAT_C$, $LON_C$);
checking whether the third intermediate straight line forms at least an angle of less than 90° with the flight path direction ($d_{TRK}$) ; and, if so,
determining said second ideal straight line.

**13.** A monitoring method according to any of claims 9-12, further comprising the steps of:

controlling said capture device (2) to acquire images associated with the first straight objective (14a) at an acquisition rate greater than the first acquisition rate when the aircraft (1) flies over a first portion ($III_1$), contiguous with the first operating area, of said third operating area (III); and
controlling said capture device (2) to acquire images associated with the second straight objective (14b) at an acquisition rate greater than the second acquisition rate when the aircraft (1) flies over a second portion ($III_2$), contiguous with said first portion, of said third operating area (III).

**14.** A monitoring method according to any of claims 9-13, wherein, when the aircraft (1) flies over the first geographic sub-area (10a), the method further comprises the steps of:

computing the value of an angle $\gamma$ between the first straight objective (14a) and the first intermediate straight line and extending only in the first geographic sub-area (10a);
computing the value of an angle $\rho$ between boundary line $L_1$ and the second intermediate straight line, and extending only in the first geographic sub-area (10a);
computing the value of an angle $\gamma_1$ between boundary line $L_2$ and the second intermediate straight line and extending only in the first geographic sub-area (10a);

computing the value of an angle $\rho_1$ between boundary line $L_3$ and the third intermediate straight line and extending only in the first geographic sub-area (10a);

computing the value of an angle $\delta$ between boundary line $L_1$ and boundary line $L_2$ and extending only in the first geographic sub-area (10a);

controlling said capture device (2) so as to acquire images associated with the first straight objective (14a) at the first acquisition rate when the aircraft (1) flies over the first operating area (II), but not the third operating area (III) and with $|\gamma|<90°$, $\rho\geq0°$ and $|\gamma|\geq0°$;

controlling said capture device (2) so as to acquire images associated with the second straight objective (14b) at the second acquisition rate when the aircraft (1) flies over the second operating area (V), but not the third operating area (III) and with $\rho<0°$, $\gamma1<0°$ and $\rho1\geq0°$;

controlling said capture device (2) so as to acquire images associated with the first straight objective (14a) at the third acquisition rate when the aircraft (1) flies over the third operating area (III) and with $\rho>\delta/2$; and

controlling said capture device (2) so as to acquire images associated with the second straight objective (14b) at the fourth acquisition rate when the aircraft (1) flies over the third operating area (III) and with $\rho<\delta/2$.

**15.** A monitoring method according to any of claims 9-14, further comprising the steps of:

defining a fourth operating area (IV) in the second geographic sub-area (10b) between boundary line $L_1$ and boundary line $L_2$;

defining a fifth operating area (I) in a geographic area external to the first and the second geographic sub-areas (10a and 10b) and delimited by boundary line $L_4$;

defining a sixth operating area (VI) in a geographic area external to the first and the second geographic sub-areas (10a and 10b) and delimited by boundary line $L_3$;

controlling said capture device (2) to acquire images associated with the second ground location (B) when the aircraft (1) flies over said fourth operating area (IV);

controlling said capture device (2) to acquire images associated with the first ground location (A) when the aircraft (1) flies over said fifth operating area (I); and

controlling said capture device (2) to acquire images associated with the third ground location (C) when the aircraft (1) flies over said sixth operating area (VI).

## Patentansprüche

**1.** System zur Überwachung linearer Bodenziele (12), welches konfiguriert ist, um auf einem Flugzeug (1) installiert zu sein, welches angepasst ist, über einem geografischen Gebiet (10) zu fliegen, aufweisend:

- eine Bild- und/oder Videoerfassungseinrichtung (2), welche operativ mit dem Flugzeug (1) gekoppelt werden kann;
- eine Positionierungseinrichtung (4), welche dafür geeignet ist, an dem Flugzeug (1) installiert zu werden und konfiguriert ist, um erste geographische Koordinaten ($LAT_V$, $LON_V$) des Flugzeugs (1) bereitzustellen, welche eine aktuelle Position des Flugzeugs (1) entlang einer Flugwegrichtung ($d_{TRK}$) identifizieren;
- einen Speicher (16), welcher zweite ($LAT_A$, $LON_A$), dritte ($LAT_B$, $LON_B$) und vierte ($LAT_C$, $LON_C$) vorbestimmte geographische Koordinaten jeweils von mindestens einem ersten (A), einem zweiten (B) und einem dritten (C) geographischen Standort speichert, wobei die zweiten und dritten geographischen Koordinaten jeweilige Eckpunkte (A, B) eines ersten zu überwachenden geraden Ziels (14a) definieren, und die dritten und vierten geographischen Koordinaten jeweilige Eckpunkte (B, C) eines zweiten geraden Ziels definieren, welches an das erste gerade Ziel angrenzt, so überwacht werden soll, dass das erste und das zweite gerade Ziel (14a und 14b) einen elementaren Polygonzug (14) bilden;
- Verarbeitungslogik (6), welche operativ mit der Erfassungseinrichtung (2), der Positionierungseinrichtung (4) und dem Speicher (16) verbunden ist und konfiguriert ist, um:

(i) die ersten geographischen Koordinaten von der Positionierungseinrichtung (4) zu erlangen, welche eine aktuelle Position des Flugzeugs entlang einer Flugwegrichtung ($d_{TRK}$) identifizieren;

(ii) die zweiten, die dritten und die vierten vorbestimmten geographischen Koordinaten von dem Speicher (16) zu erlangen;

(iii) das geographische Gebiet (10) in ein erstes und ein zweites geographisches Teilgebiet (10a und 10b) zu unterteilen, welche durch den elementaren Polygonzug (14) voneinander abgetrennt sind;

(iv) festzulegen, ob eine erste ideale gerade Linie existiert, wobei die erste ideale gerade Linie durch die ersten geographischen Koordinaten verläuft und das erste lineare Ziel (14a) orthogonal schneidet;

(v) wenn die erste ideale gerade Linie existiert, dann die Erfassungseinrichtung (2) auf das erste gerade Ziel entlang der durch die erste ideale gerade Linie definierten Richtung auszurichten, andernfalls den Vorgang (vi) auszuführen, um

(vi) eine zweite ideale gerade Linie festzulegen, welche durch die ersten geographischen Koordinaten verläuft und das zweite gerade Ziel orthogonal schneidet, und die Erfassungseinrichtung (2) auf das zweite gerade Ziel entlang der durch die erste ideale gerade Linie definierten Richtung auszurichten,

**dadurch gekennzeichnet, dass** die Verarbeitungslogik (6) außerdem konfiguriert ist, um ein erstes Operationsgebiet (II), welches dem ersten geraden Ziel (14a) zugeordnet ist, ein zweites Operationsgebiet (V), welches dem zweiten geraden Ziel (14b) zugeordnet ist, und ein drittes Operationsgebiet (III), zu definieren, wobei das erste Operationsgebiet (II) zwischen einer zu dem ersten geraden Ziel (14a) orthogonalen und durch die zweiten geographischen Koordinaten ($LAT_A$, $LAT_A$) verlaufenden Begrenzungslinie $L_4$ und einer zu dem ersten geraden Ziel (14a) orthogonalen und durch die dritten geographischen Koordinaten ($LAT_B$, $LON_B$) verlaufenden Begrenzungslinie $L_1$ liegt, wobei das zweite Operationsgebiet (V) zwischen einer zu dem zweiten geraden Ziel (14b) orthogonalen und durch die dritten geographischen Koordinaten ($LAT_B$, $LAT_B$) verlaufenden Begrenzungslinie $L_2$, und einer zu dem zweiten geraden Ziel (14b) orthogonalen und durch die vierten geographischen Koordinaten ($LAT_C$, $LON_C$) verlaufenden Begrenzungslinie $L_3$ liegt, und wobei das dritte Operationsgebiet (III) zwischen der Begrenzungslinie $L_2$ und $L_1$ liegt und durch die teilweise Überlappung der ersten und zweiten Operationsgebiete definiert ist, wobei die Verarbeitungslogik (6) außerdem konfiguriert ist, um:

• die Erfassungseinrichtung (2) zu steuern, um bei einer ersten Erfassungsrate Bilder zu erfassen, welche dem ersten geraden Ziel (14a) zugeordnet sind, während das Flugzeug (1) über dem ersten Operationsgebiet (II), nicht jedoch über dem dritten Operationsgebiet (III), fliegt;
• die Erfassungseinrichtung (2) zu steuern, um bei einer zweiten Erfassungsrate Bilder zu erfassen, welche dem zweiten geraden Ziel (14b) zugeordnet sind, während das Flugzeug (1) über dem zweiten Operationsgebiet (V), nicht jedoch über dem dritten Operationsgebiet (III), fliegt; und
• die Erfassungseinrichtung (2) zu steuern, um Bilder, welche sowohl dem ersten geraden Ziel (14a) als auch dem zweiten geraden Ziel (14b) zugeordnet sind, bei einer dritten Erfassungsrate zu erfassen, welche höher als die erste und die zweite Erfassungsrate ist, während das Flugzeug (1) über dem dritten Operationsgebiet (III), fliegt.

2.  Überwachungssystem nach Anspruch 1, wobei die Verarbeitungslogik (6) des Weiteren konfiguriert ist, um
das erste gerade Ziel (14a) in eine Vielzahl erster gerader Teilsegmente ($A_i$) zu unterteilen;
das zweite gerade Ziel (14b) in eine Vielzahl zweiter gerader Teilsegmente ($B_i$) zu unterteilen; und
die ersten geographischen Koordinaten des Flugzeugs entlang der Strecke mithilfe der Positionierungseinrichtung (4) regelmäßig zu aktualisieren,
wobei die Schritte des Bestimmens, ob die erste ideale gerade Linie oder die zweite ideale gerade Linie existiert, an jedem ersten beziehungsweise zweiten geraden Teilsegment ($A_i$ oder $B_i$) ausgeführt werden.

3.  Überwachungssystem nach Anspruch 1 oder 2, wobei der Vorgang (iv) aufweist:

Berechnen von jeweiligen ersten und zweiten zwischenliegenden geraden Linien, wobei jede von ihnen durch einen Punkt, der durch die ersten geographischen Koordinaten ($LAT_V$, $LON_V$) definiert ist, und durch einen jeweiligen Punkt (A, B), welcher durch die zweiten ($LAT_A$, $LON_A$) und dritten ($LAT_B$, $LON_B$) geographischen Koordinaten, identifiziert wird, verläuft; und
Bestimmen, ob mindestens eine der ersten und zweiten zwischenliegenden geraden Linien mit der Flugwegrichtung ($d_{TRK}$) mindestens einen jeweiligen Winkel kleiner als 90° bildet, und, wenn dem so ist, Festlegen der ersten idealen geraden Linie.

4.  Überwachungssystem nach einem der vorherigen Ansprüche, wobei der Vorgang (vi) aufweist:

Berechnen einer dritten zwischenliegenden geraden Linie, welche durch einen Punkt, welcher durch die ersten geographischen Koordinaten ($LAT_V$, $LON_V$) identifiziert wird, und durch einen Punkt (C), welcher durch die vierten geographischen Koordinaten ($LAT_C$, $LON_C$) identifiziert wird, verläuft;
Prüfen, ob die dritte zwischenliegende gerade Linie mit der Flugwegrichtung ($d_{TRK}$) mindestens einen Winkel kleiner als 90° bildet, und, wenn dem so ist,
Festlegen der zweiten idealen geraden Linie.

5. Überwachungssystem nach einem der vorherigen Ansprüche, wobei die Verarbeitungslogik (6) ferner konfiguriert ist, um:

die Erfassungseinrichtung (2) zu steuern, um Bilder, welche dem ersten geraden Ziel (14a) zugeordnet sind, bei einer höheren Erfassungsrate als die erste Erfassungsrate zu erfassen, während das Flugzeug (1) über einem ersten Abschnitt ($III_1$) des dritten Operationsgebiets (III) fliegt, welcher an das erste Operationsgebiet anliegt; und
die Erfassungseinrichtung (2) zu steuern, um Bilder, welche dem zweiten geraden Ziel (14b) zugeordnet sind, bei einer höheren Erfassungsrate als die zweite Erfassungsrate zu erfassen, während das Flugzeug (1) über einem zweiten Abschnitt ($III_2$) des dritten Operationsgebiets (III) fliegt, welcher an den ersten Abschnitt ($III_1$) anliegt.

6. Überwachungssystem nach einem der vorherigen Ansprüche, wobei, während das Flugzeug (1) über dem ersten geographischen Teilgebiet (10a) fliegt, die Verarbeitungslogik (6) ferner konfiguriert ist, um:

den Wert eines Winkels $\gamma$ zwischen dem ersten geraden Ziel (14a) und der ersten zwischenliegenden geraden Linie zu berechnen, welche sich nur in dem ersten geographischen Teilgebiet (10a) erstreckt;
den Wert eines Winkels $\rho$ zwischen der Begrenzungslinie $L_1$ und der zweiten zwischenliegenden geraden Linie zu berechnen, welche sich nur in dem ersten geographischen Teilgebiet (10a) erstreckt;
den Wert eines Winkels $\gamma_1$ zwischen Begrenzungslinie $L_2$ und der zweiten zwischenliegenden geraden Linie zu berechnen, welche sich nur in dem ersten geographischen Teilgebiet (10a) erstreckt;
den Wert eines Winkels $\rho_1$ zwischen Begrenzungslinie $L_3$ und der dritten zwischenliegenden geraden Linie zu berechnen, welche sich nur in dem ersten geographischen Teilgebiet (10a) erstreckt;
den Wert eines Winkels $\delta$ zwischen Begrenzungslinie $L_1$ und Begrenzungslinie $L_2$ zu berechnen, welche sich nur in dem ersten geographischen Teilgebiet (10a) erstreckt;
die Erfassungseinrichtung (2) zu steuern, um bei der ersten Erfassungsrate Bilder zu erfassen, welche dem ersten geraden Ziel (14a) zugeordnet sind, während das Flugzeug (1) über dem ersten Operationsgebiet (II), nicht jedoch über dem dritten Operationsgebiet (III), fliegt und bei $|\gamma|<90°$, $\rho \geq 0°$ und $|\gamma_1|\geq 0°$;
die Erfassungseinrichtung (2) zu steuern, um bei der zweiten Erfassungsrate Bilder zu erfassen, welche dem zweiten geraden Ziel (14b) zugeordnet sind, während das Flugzeug (1) über dem zweiten Operationsgebiet (V), nicht jedoch über dem dritten Operationsgebiet (III), fliegt und bei $\rho <0°$, $\gamma_1 < 0°$ und $\rho_1\geq 0°$;
die Erfassungseinrichtung (2) zu steuern, um bei der dritten Erfassungsrate Bilder zu erfassen, welche dem ersten geraden Ziel (14a) zugeordnet sind, während das Flugzeug (1) über dem dritten Operationsgebiet (III) fliegt und bei $\rho > \delta / 2$;
die Erfassungseinrichtung (2) zu steuern, um bei der vierten Erfassungsrate Bilder zu erfassen, welche dem zweiten geraden Ziel (14B) zugeordnet sind, während das Flugzeug (1) über dem dritten Operationsgebiet (III) fliegt und bei $\rho < \delta / 2$;

7. Überwachungssystem nach einem der vorherigen Ansprüche, wobei die Verarbeitungslogik (6) außerdem konfiguriert ist, um:

ein viertes Operationsgebiet (IV) in dem zweiten geographischen Teilgebiet (10b) zwischen Begrenzungslinie $L_1$ und Begrenzungslinie $L_2$ zu definieren;
ein fünftes Operationsgebiet (I) in einem geographischen Gebiet zu definieren, welches außerhalb der ersten und zweiten geographischen Teilgebiete (10a und 10b) liegt und durch die Begrenzungslinie $L_4$ begrenzt ist;
ein sechstes Operationsgebiet (VI) in einem geographischen Gebiet zu definieren, welches außerhalb des ersten und zweiten geographischen Teilgebiets (10a und 10b) liegt und durch die Begrenzungslinie $L_3$ begrenzt ist;
die Erfassungseinrichtung (2) zu steuern, um Bilder zu erfassen, welche dem zweiten Bodenziel (B) zugeordnet sind, während das Flugzeug (1) über dem vierten Operationsgebiet (IV) fliegt;
die Erfassungseinrichtung (2) zu steuern, um Bilder zu erfassen, welche dem ersten Bodenziel (A) zugeordnet sind, während das Flugzeug (1) über dem fünften Operationsgebiet (I) fliegt; und
die Erfassungseinrichtung (2) zu steuern, um Bilder zu erfassen, welche dem dritten Bodenziel (C) zugeordnet sind, während das Flugzeug (1) über dem sechsten Operationsgebiet (VI) fliegt.

8. System nach einem der vorherigen Ansprüche, wobei das System außerdem eine Einrichtung zum Errechnen der digitalen Geländeerhebungsdaten (DTED) aufweist, welche konfiguriert ist, jeder der zweiten (LAT$_A$, LON$_A$), dritten (LAT$_B$, LON$_B$) und vierten (LAT$_C$, LON$_C$) geographischen Koordinaten eine jeweilige Höhe über dem Meeresspiegel zuzuordnen.

9. Verfahren zur Überwachung linearer Bodenziele (12) von einem Flugzeug (1) aus, welches angepasst ist, um über ein geographisches Gebiet (10) zu fliegen und aufweisend: eine Bild- und/oder Videoerfassungseinrichtung (2); eine Positionierungseinrichtung (4), welche konfiguriert ist, um erste geographische Koordinaten (LAT$_V$, LON$_V$) des Flugzeugs (1) bereitzustellen, welches eine aktuelle Position des Flugzeugs (1) entlang einer Flugwegrichtung (d$_{TRK}$) identifiziert; einen Speicher (16), welcher zweite (LAT$_A$, LON$_A$), dritte (LAT$_B$, LON$_B$) und vierte (LAT$_C$, LON$_C$) vorbestimmte geographische Koordinaten von zumindest einem ersten (A), einem zweiten (B) und einem dritten (C) Bodenstandorts speichert, beziehungsweise die zweiten und dritten geographischen Koordinaten, welche jeweilige Eckpunkte (A, B) eines ersten zu überwachenden geraden Ziel (14a) definieren, und die dritten und vierten geographische Koordinaten, welche jeweilige Eckpunkte (B, C) eines zweiten zu überwachenden geraden Ziels (14b), welches an das erste gerade Ziel angrenzt, sodass das erste und das zweite gerade Ziel (14a und 14b) einen elementaren Polygonzug (14) bilden,
wobei das Verfahren die Schritte aufweist:

(i) Erlangen der ersten geographischen Koordinaten, welche eine aktuelle Position des Flugzeugs entlang der Flugwegrichtung (d$_{TRK}$) identifizieren, von der Positionierungseinrichtung (4);
(ii) Erlangen der zweiten, dritten und vierten vorbestimmten geographischen Koordinaten von dem Speicher (16);
(iii) Unterteilen des geographischen Gebiets (10) in ein erstes und ein zweites geographisches Teilgebiet (10a und 10b) zu, welche voneinander durch den offenen elementaren Polygonzug (14) abgetrennt sind;
(iv) Festlegen, ob eine erste ideale gerade Linie existiert, die durch die ersten geographischen Koordinaten verläuft und das erste gerade Ziel (14a) senkrecht schneidet;
(v) wenn die erste ideale Linie existiert, Ausrichten der Erfassungseinrichtung (2) auf das erste gerade Ziel entlang der Richtung, welche durch die erste ideale gerade Linie definiert ist, andernfalls Ausführen des Vorgangs (vi):
(vi) Festlegen einer zweiten idealen geraden Linie, welche durch die ersten geographischen Koordinaten verläuft und welche das zweite gerade Ziel senkrecht schneidet, und
Ausrichten der Erfassungseinrichtung (2) auf das zweite gerade Ziel entlang der Richtung, welche durch die erste ideale gerade Linie definiert ist,

**dadurch gekennzeichnet, dass** das Verfahren außerdem den Schritt des Definierens eines ersten Operationsgebiets (II), welches dem ersten geraden Ziel (14a) zugeordnet ist, eines zweiten Operationsgebiets (V), welches dem zweiten geraden Ziel (14b) zugeordnet ist, und eines dritten Operationsgebiets (III) aufweist,
wobei das erste Operationsgebiet (II) zwischen einer Begrenzungslinie L$_4$, welche orthogonal zu dem ersten geraden Ziel (14a) ist und durch die zweiten geographischen Koordinaten (LAT$_A$, LAT$_A$) verläuft, und einer Begrenzungslinie L$_1$, welche zu dem ersten geraden Ziel (14a) orthogonal ist und durch die vierten geographischen Koordinaten (LAT$_B$, LON$_B$) verläuft, liegt,
wobei das zweite Operationsgebiet (V) zwischen einer Begrenzungslinie L$_2$, welche orthogonal zu dem zweiten geraden Ziel (14b) ist und durch die zweiten geographischen Koordinaten (LAT$_B$, LAT$_B$) verläuft, und einer Begrenzungslinie L$_3$, welche zu dem zweiten geraden Ziel (14b) orthogonal ist und durch die vierten geographischen Koordinaten (LAT$_C$, LON$_C$) verläuft, liegt, und
wobei das dritte Operationsgebiet (III) zwischen Begrenzungslinie L$_2$ und Begrenzungslinie L$_1$ liegt und durch die teilweise Überlappung des ersten und zweiten Operationsgebiets definiert ist,
wobei das Verfahren außerdem die Schritte aufweist:

• Steuern der Erfassungseinrichtung (2), um bei einer ersten Erfassungsrate Bilder zu erfassen, welche dem ersten geraden Ziel (14a) zugeordnet sind, während das Flugzeug (1) über dem ersten Operationsgebiet (I), nicht jedoch über dem dritten Operationsgebiet (III), fliegt;
• Steuern der Erfassungseinrichtung (2), um bei einer zweiten Erfassungsrate Bilder zu erfassen, welche dem zweiten geraden Ziel (14b) zugeordnet sind, während das Flugzeug (1) über dem zweiten Operationsgebiet (V), nicht jedoch über dem dritten Operationsgebiet (III), fliegt; und
• Steuern der Erfassungseinrichtung (2), um Bilder, welche dem ersten geraden Ziel (14a) zugeordnet sind, bei einer dritten Erfassungsrate, welche größer als die erste und zweite Erfassungsrate ist, zu erfassen, während das Flugzeug (1) über dem dritten Operationsgebiet (III) fliegt;

**10.** Steuerungsverfahren nach Anspruch 9, welches außerdem die Schritte aufweist:

des Unterteilens des ersten geraden Ziels (14a) in eine Vielzahl erster gerader Teilsegmente ($A_i$);
Unterteilen des zweiten geraden Ziels (14b) in eine Vielzahl zweiter gerader Teilsegmente ($B_i$); und
regelmäßiges Aktualisieren der ersten geographischen Koordinaten des Flugzeugs entlang der Flugwegrichtung mithilfe der Positionierungseinrichtung (4),
wobei die Schritte Festlegen, ob die erste ideale gerade Linie oder die zweite ideale gerade Linie existiert, regelmäßig an jedem ersten oder beziehungsweise zweiten geraden Teilsegment ($A_i$, $B_i$) ausgeführt werden.

**11.** Überwachungsverfahren nach Anspruch 9 oder 10, wobei Schritt (iv) aufweist:

Berechnen von jeweiligen ersten und zweiten zwischenliegenden geraden Linien, welche durch einen Punkt verlaufen, der durch die ersten geographischen Koordinaten ($LAT_V$, $LON_V$) identifiziert wird und durch einen jeweiligen Punkt (A, B), welcher durch die zweiten ($LAT_A$, $LON_A$) beziehungsweise die dritten ($LAT_B$, $LON_B$) geographischen Koordinaten definiert ist; und
Festlegen, ob mindestens eine der ersten und zweiten zwischenliegenden geraden Linien mit der Flugwegrichtung ($d_{TRK}$) mindestens einen jeweiligen Winkel kleiner als 90° bildet, und, wenn dem so ist, Festlegen der ersten idealen geraden Linie.

**12.** Steuerverfahren nach einem der Ansprüche 9-11, wobei der Schritt (vi) aufweist:

Berechnen einer dritten zwischenliegenden geraden Linie, welche durch einen durch die ersten geographischen Koordinaten ($LAT_V$, $LON_V$) identifizierten Punkt und einen durch die vierten geographischen Koordinaten ($LAT_C$, $LON_C$) identifizierten Punkt (C) verläuft;
Prüfen, ob die dritte zwischenliegende gerade Linie mit der Flugwegrichtung ($d_{TRK}$) mindestens einen jeweiligen Winkel kleiner als 90° bildet; und, wenn dem so ist,
Festlegen der ersten idealen geraden Linie.

**13.** Steuerverfahren nach einem der Ansprüche 9-12, wobei, das Verfahren außerdem die folgenden Schritte aufweist:

Steuern der Erfassungseinrichtung (2), um Bilder, welche dem ersten geraden Ziel (14a) zugeordnet sind, bei einer höheren Erfassungsrate als die erste Erfassungsrate zu erfassen, während das Flugzeug (1) über einem ersten Abschnitt ($III_1$) des dritten Operationsgebiets (III) fliegt, welcher an das erste Operationsgebiet anliegt; und
Steuern der Erfassungseinrichtung (2), um Bilder, welche dem zweiten geraden Ziel (14b) zugeordnet sind, bei einer höheren Erfassungsrate als die zweite Erfassungsrate zu erfassen, während das Flugzeug (1) über einem zweiten Abschnitt ($III_2$) des dritten Operationsgebiets (III) fliegt, welcher an den ersten Abschnitt anliegt.

**14.** Steuerverfahren nach einem der Ansprüche 9-13, wobei, wenn das Flugzeug (1) über dem ersten geographischen Teilgebiet (10a) fliegt, das Verfahren außerdem die Schritte aufweist:

des Berechnens des Werts eines Winkels $\gamma$ zwischen dem ersten geraden Ziel (14a) und der ersten zwischenliegenden geraden Linie, welche sich nur in dem ersten geographischen Teilgebiet (10a) erstreckt;
des Berechnens des Werts eines Winkels $\rho$ zwischen Begrenzungslinie $L_1$ und der zweiten zwischenliegenden geraden Linie, welche sich nur in dem ersten geographischen Teilgebiet (10a) erstreckt;
des Berechnens des Werts eines Winkels $\gamma_1$ zwischen Begrenzungslinie $L_2$ und der zweiten zwischenliegenden geraden Linie, welche sich nur in dem ersten geographischen Teilgebiet (10a) erstreckt;
des Berechnens des Werts eines Winkels $\rho_1$ zwischen Begrenzungslinie $L_3$ und der dritten zwischenliegenden geraden Linie, welche sich nur in dem ersten geographischen Teilgebiet (10a) erstreckt;
des Berechnens des Werts eines Winkels $\delta$ zwischen Begrenzungslinie $L_1$ und Begrenzungslinie $L_2$, welche sich nur in dem ersten geographischen Teilgebiet (10a) erstreckt;
des Steuerns der Erfassungseinrichtung (2), um bei der ersten Erfassungsrate dem ersten geraden Ziel (14a) zugeordnete Bilder zu erfassen, während das Flugzeug (1) über dem ersten Operationsgebiet (II), nicht jedoch über dem dritten Operationsgebiet (III) fliegt und bei $|\gamma| < 90°$, $\rho \geq 0°$ und $|\gamma 1| \geq 0°$;
des Steuerns der Erfassungseinrichtung (2), um bei der zweiten Erfassungsrate dem zweiten geraden Ziel (14b) zugeordnete Bilder zu erfassen, während das Flugzeug (1) über dem zweiten Operationsgebiet (V), nicht jedoch über dem dritten Operationsgebiet (III), fliegt und bei $\rho < 0°$, $\gamma 1 < 0°$ und $\rho 1 \geq 0°$;
des Steuerns der Erfassungseinrichtung (2), um bei der dritten Erfassungsrate dem ersten geraden Ziel (14b) zugeordnete Bilder zu erfassen, während das Flugzeug (1) über dem dritten Operationsgebiet (III) fliegt und

bei $\rho > \delta / 2$; und

des Steuerns der Erfassungseinrichtung (2), um bei der vierten Erfassungsrate dem zweiten geraden Ziel (14b) zugeordnete Bilder zu erfassen, während das Flugzeug (1) dem dritten Operationsgebiet (III) fliegt und bei $\rho < \delta / 2$.

15. Steuerverfahren nach einem der Ansprüche 9-14, welches ferner die Schritte aufweist:

des Definierens eines vierten Operationsgebiets (IV) in dem zweiten geographischen Teilgebiet (10b) zwischen Begrenzungslinie $L_1$ und Begrenzungslinie $L_2$;

des Definierens eines fünften Operationsgebiets (I) in einem geographischen Gebiet, welches außerhalb der ersten und zweiten geographischen Teilgebiete (10a und 10b) liegt und durch die Begrenzungslinie $L_4$ begrenzt ist;

des Definierens eines sechsten Operationsgebiets (VI) in einem geographischen Gebiet, welches außerhalb der ersten und zweiten geographischen Teilgebiete (10a und 10b) liegt und durch die Begrenzungslinie $L_3$ begrenzt ist;

des Steuerns der Erfassungseinrichtung (2), um dem zweiten Bodenziel (B) zugeordnete Bilder zu erfassen, während das Flugzeug (1) über dem vierten Operationsgebiet (IV) fliegt;

des Steuerns der Erfassungseinrichtung (2), um dem ersten Bodenziel (A) zugeordnete Bilder zu erfassen, während das Flugzeug (1) über dem fünften Operationsgebiet (I) fliegt; und

des Steuerns der Erfassungseinrichtung (2), um dem dritten Bodenziel (C) zugeordnete Bilder zu erfassen, während das Flugzeug (1) über dem sechsten Operationsgebiet (VI) fliegt;

## Revendications

1. Système pour contrôler des objectifs au sol linéaires (12), configuré pour être installé sur un aéronef (1) adapté pour voler au-dessus d'une zone géographique (10), comprenant :

- un dispositif de capture d'image et/ou de vidéo (2) qui peut être fonctionnellement accouplé audit aéronef (1) ;
- un dispositif de positionnement (4) approprié pour être installé sur l'aéronef (1) et configuré pour fournir des premières coordonnées géographiques ($LAT_V$, $LON_V$) dudit aéronef (1) identifiant une position actuelle de l'aéronef (1) le long d'une première direction de chemin de vol ($d_{TRK}$) ;
- une mémoire (16) stockant des deuxièmes ($LAT_A$, $LON_A$), troisièmes ($LAT_B$, $LON_B$) et quatrièmes ($LAT_C$, $LON_C$) coordonnées géographiques prédéterminées d'au moins un premier (A), un deuxième (B), un troisième (C) emplacement au sol respectivement, lesdites deuxièmes et troisièmes coordonnées géographiques définissant des sommets (A, B) respectifs d'un premier objectif droit (14a) à contrôler, et lesdites troisièmes et quatrièmes coordonnées géographiques définissant des sommets (B et C) respectifs d'un deuxième objectif droit (14b), contigu au premier objectif droit, à contrôler de telle sorte que les premier et deuxième objectifs droits (14a et 14b) forment une chaîne polygonale simple (14) ;
- de la logique de traitement (6) fonctionnellement connectée au dispositif de capture (2), au dispositif de positionnement (4) et à la mémoire (16), et configurée pour :

(i) acquérir, à partir du dispositif de positionnement (4), les premières coordonnées géographiques identifiant une position actuelle de l'aéronef le long de ladite direction de chemin de vol ($d_{TRK}$) ;

(ii) acquérir, à partir de la mémoire (16), les deuxièmes, troisièmes et quatrièmes coordonnées géographiques prédéterminées ;

(iii) subdiviser la zone géographique (10) en une première et une deuxième sous-zone géographique (10a et 10b) séparées l'une de l'autre par ladite chaîne polygonale simple (14) ;

(iv) déterminer si une première ligne droite idéale existe, la première ligne droite idéale passant à travers les premières coordonnées géographiques et coupant orthogonalement le premier objectif droit (14a) ;

(v) si ladite première ligne droite idéale existe, alors diriger ledit dispositif de capture (2) vers ledit premier objectif droit le long de la direction définie par ladite première ligne droite idéale, sinon effectuer l'opération (vi) pour

(vi) déterminer une deuxième ligne droite idéale qui passe à travers les premières coordonnées géographiques et coupe orthogonalement le deuxième objectif droit, et diriger ledit dispositif de capture (2) vers le deuxième objectif droit le long de la direction définie par ladite deuxième ligne droite idéale,

**caractérisé en ce que** la logique de traitement (6) est en outre configurée pour définir une première zone d'opération (II) associée au premier objectif droit (14a), une deuxième zone d'opération (V) associée au deuxième objectif droit (14b) et une troisième zone d'opération (III),

ladite première zone d'opération (II) étant comprise entre une ligne de frontière $L_4$ orthogonale au premier objectif droit (14a) et passant à travers les deuxièmes coordonnées géographiques ($LAT_A$, $LON_A$), et une ligne de frontière $L_1$ orthogonale au premier objectif droit (14a) et passant à travers les troisièmes coordonnées géographiques ($LAT_B$, $LON_B$),

ladite deuxième zone d'opération (V) étant comprise entre une ligne de frontière $L_2$ orthogonale au deuxième objectif droit (14b) et passant à travers les troisièmes coordonnées géographiques ($LAT_B$, $LON_B$), et une ligne de frontière $L_3$ orthogonale au deuxième objectif droit (14b) et passant à travers les quatrièmes coordonnées géographiques ($LAT_C$, $LON_C$), et

ladite troisième zone d'opération (III) étant comprise entre la ligne de frontière $L_2$ et la ligne de frontière $L_1$ et étant définie par le chevauchement partiel des première et deuxièmes zones d'opération, dans lequel la logique de traitement (6) est en outre configurée pour :

• commander ledit dispositif de capture (2) pour acquérir des images associées au premier objectif droit (14a) à un premier rythme d'acquisition quand l'aéronef (1) vole au-dessus de ladite première zone d'opération (II), mais pas de ladite troisième zone d'opération (III) ;

• commander ledit dispositif de capture (2) pour acquérir des images associées au deuxième objectif droit (14b) à un deuxième rythme d'acquisition quand l'aéronef (1) vole au-dessus de ladite deuxième zone d'opération (V), mais pas de ladite troisième zone d'opération (III) ; et

• commander ledit dispositif de capture (2) pour acquérir des images associées à la fois au premier objectif droit (14a) et au deuxième objectif droit (14b) à un troisième rythme d'acquisition, supérieur au premier et au deuxième rythme d'acquisition, quand l'aéronef (1) vole au-dessus de ladite troisième zone d'opération (III).

2. Système de contrôle selon la revendication 1, dans lequel la logique de traitement (6) est en outre configurée pour :

subdiviser le premier objectif droit (14a) en une pluralité de premiers sous-segments droits ($A_i$) ;

subdiviser le deuxième objectif droit (14b) en une pluralité de deuxièmes sous-segments droits ($B_i$) ; et

mettre à jour périodiquement les premières coordonnées géographiques de l'aéronef le long dudit itinéraire au moyen du dispositif de positionnement (4),

lesdites étapes pour déterminer si la première ligne droite idéale ou la deuxième ligne droite idéale existe étant réalisées au niveau de chaque premier ou, respectivement, deuxième sous-segment droit ($A_i$ ou $B_i$).

3. Système de contrôle selon la revendication 1 ou 2, dans lequel l'opération (iv) inclut :

le calcul de première et deuxième lignes droites intermédiaires respectives, chacune d'elle passant à travers un point défini par les premières coordonnées géographiques ($LAT_V$, $LON_V$) et à travers un point respectif (A, B) identifié par les deuxièmes ($LAT_A$, $LON_A$) et troisièmes ($LAT_B$, $LON_B$) coordonnées géographiques ; et

le fait de déterminer si au moins une desdites première et deuxième lignes droites intermédiaires forme au moins un angle respectif de moins de 90° avec la direction de chemin de vol ($d_{TRK}$) et, si c'est le cas, déterminer ladite première ligne droite idéale.

4. Système de contrôle selon l'une quelconque des revendications précédentes, dans lequel l'opération (vi) inclut :

le calcul d'une troisième ligne droite intermédiaire passant à travers un point identifié par les premières coordonnées géographiques ($LAT_V$, $LON_V$) et un point (C) identifié par les quatrièmes coordonnées géographiques ($LAT_C$, $LON_C$) ;

le fait de vérifier si la troisième ligne droite intermédiaire forme au moins un angle de moins de 90° avec la direction de chemin de vol ($d_{TRK}$) et, si c'est le cas,

la détermination de ladite deuxième ligne droite idéale.

5. Système de contrôle selon l'une quelconque des revendications précédentes, dans lequel la logique de traitement (6) est en outre configurée pour :

commander ledit dispositif de capture (2) pour acquérir des images associées au premier objectif droit (14a) à un rythme d'acquisition supérieur au premier rythme d'acquisition quand l'aéronef (1) vole au-dessus d'une troisième partie ($III_1$), contiguë à la première zone d'opération, de ladite troisième zone d'opération (III) ; et

commander ledit dispositif de capture (2) pour acquérir des images associées au deuxième objectif droit (14b) à un rythme d'acquisition supérieur au deuxième rythme d'acquisition quand l'aéronef (1) vole au-dessus d'une deuxième partie (III$_2$), contiguë à ladite première partie (III$_1$), de ladite troisième zone d'opération (III).

6. Système de contrôle selon l'une quelconque des revendications précédentes, dans lequel l'aéronef (1) vole au-dessus de la première sous-zone géographique (10a), la logique de traitement (6) est en outre configurée pour :

calculer la valeur d'un angle $\gamma$ entre le premier objectif droit (14a) et la première ligne droite intermédiaire et s'étendant seulement dans la première sous-zone géographique (10a) ;
calculer la valeur d'un angle $\rho$ entre la ligne de frontière L$_1$ et la deuxième ligne droite intermédiaire et s'étendant seulement dans la première sous-zone géographique (10a) ;
calculer la valeur d'un angle $\gamma_1$ entre la ligne de frontière L$_2$ et la deuxième ligne droite intermédiaire et s'étendant seulement dans la première sous-zone géographique (10a) ;
calculer la valeur d'un angle pi entre la ligne de frontière L$_3$ et la troisième ligne droite intermédiaire et s'étendant seulement dans la première sous-zone géographique (10a) ;
calculer la valeur d'un angle $\delta$ entre la ligne de frontière L$_1$ et la ligne de frontière L$_2$ et s'étendant seulement dans la première sous-zone géographique (10a) ;
commander ledit dispositif de capture (2) de manière à acquérir des images associées au premier objectif droit (14a) au premier rythme d'acquisition quand l'aéronef (1) vole au-dessus de la première zone d'opération (II), mais pas de la troisième zone d'opération (III) et quand $|\gamma|<90°$, $\rho \geq 0°$ et $|\gamma_1|<0°$ ;
commander ledit dispositif de capture (2) de manière à acquérir des images associées au deuxième objectif droit (14b) au deuxième rythme d'acquisition quand l'aéronef (1) vole au-dessus de la deuxième zone d'opération (V), mais pas de la troisième zone d'opération (III) et quand $\rho<0°$, $\gamma_1<0°$ et $\rho_1 \geq 0°$;
commander ledit dispositif de capture (2) de manière à acquérir des images associées au premier objectif droit (14a) au troisième rythme d'acquisition quand l'aéronef (1) vole au-dessus de la troisième zone d'opération (III) et quand $\rho > \delta/2$ ;
commander ledit dispositif de capture (2) de manière à acquérir des images associées au deuxième objectif droit (14b) au quatrième rythme d'acquisition quand l'aéronef (1) vole au-dessus de la troisième zone d'opération (III) et quand $\rho < \delta/2$.

7. Système de contrôle selon l'une quelconque des revendications précédentes, dans lequel la logique de traitement (6) est en outre configurée pour :

définir une quatrième zone d'opération (IV) dans la deuxième sous-zone géographique (10b) entre la ligne de frontière L$_1$ et la ligne de frontière L$_2$ ;
définir une cinquième zone d'opération (I) dans une zone géographique externe aux première et deuxième sous-zones géographiques (10a et 10b) et délimitée par la ligne de frontière L$_4$ ;
définir une sixième zone d'opération (VI) dans une zone géographique externe aux première et deuxième sous-zones géographiques (10a et 10b) et délimitée par la ligne de frontière L$_3$ ;
commander ledit dispositif de capture (2) pour acquérir des images associées au deuxième emplacement au sol (B) quand l'aéronef (1) vole au-dessus de ladite quatrième zone d'opération (IV) ;
commander ledit dispositif de capture (2) pour acquérir des images associées au premier emplacement au sol (A) quand l'aéronef (1) vole au-dessus de ladite cinquième zone d'opération (I) ; et
commander ledit dispositif de capture (2) pour acquérir des images associées au troisième emplacement au sol (C) quand l'aéronef (1) vole au-dessus de ladite sixième zone d'opération (VI).

8. Système selon l'une quelconque des revendications précédentes, incluant en outre un dispositif pour calculer les données d'élévation de terrain numériques (DTED) configurées pour associer à chacune desdites deuxièmes (LAT$_A$, LON$_A$), troisièmes (LAT$_B$, LON$_B$) et quatrièmes (LAT$_C$, LON$_C$) coordonnées géographiques, une hauteur respective au-dessus du niveau de la mer.

9. Procédé pour contrôler des objectifs au sol linéaires (12) depuis un aéronef (1) adapté pour voler au-dessus d'une zone géographique (10) et comprenant : un dispositif de capture d'image et/ou de vidéo (2) ; un dispositif de positionnement (4) configuré pour fournir des premières coordonnées géographiques (LAT$_V$, LON$_V$) dudit aéronef (1) identifiant une position actuelle de l'aéronef (1) le long d'une première direction de chemin de vol (d$_{TRK}$) ; une mémoire (16) stockant des deuxièmes (LAT$_A$, LON$_A$), troisièmes (LAT$_B$, LON$_B$) et quatrièmes (LAT$_C$, LON$_C$) coordonnées géographiques prédéterminées d'au moins un premier (A), un deuxième (B), un troisième (C) emplacement au sol respectivement, lesdites deuxièmes et troisièmes coordonnées géographiques définissant des sommets (A, B) respectifs d'un premier objectif droit (14a) à contrôler, et lesdites troisièmes et quatrièmes coordonnées géographiques définissant des sommets (B, C) respectifs d'un deuxième objectif droit (14b), contigu au premier objectif droit, à contrôler, de telle sorte que les premier et deuxième objectifs droits (14a et 14b) forment une chaîne polygonale simple (14),

ledit procédé comprenant les étapes consistant à :

(i) acquérir, à partir du dispositif de positionnement (4), les premières coordonnées géographiques identifiant une position actuelle de l'aéronef le long de ladite direction de chemin de vol ($d_{TRK}$) ;

(ii) acquérir, à partir de la mémoire (16), les deuxièmes, troisièmes et quatrièmes coordonnées géographiques prédéterminées ;

(iii) subdiviser la zone géographique (10) en une première et une deuxième sous-zone géographique (10a et 10b) séparées l'une de l'autre par ladite chaîne polygonale simple (14) ;

(iv) déterminer s'il existe une première ligne droite idéale qui passe à travers les premières coordonnées géographiques et qui coupe orthogonalement le premier objectif droit (14a) ;

(v) si ladite première ligne droite idéale existe, alors diriger ledit dispositif de capture (2) vers ledit premier objectif droit le long de la direction définie par ladite première ligne droite idéale, sinon effectuer l'opération (vi) de

(vi) détermination d'une deuxième ligne droite idéale qui passe à travers les premières coordonnées géographiques et coupe orthogonalement le deuxième objectif droit, et d'orientation dudit dispositif de capture (2) vers le deuxième objectif droit le long de la direction définie par ladite deuxième ligne droite idéale,

**caractérisé en ce qu'**il comprend en outre l'étape de définition d'une première zone d'opération (II) associée au premier objectif droit (14a), d'une deuxième zone d'opération (V) associée au deuxième objectif droit (14b) et d'une troisième zone d'opération (III),

ladite première zone d'opération (II) étant comprise entre une ligne de frontière $L_4$ orthogonale au premier objectif droit (14a) et passant à travers les deuxièmes coordonnées géographiques ($LAT_A$, $LON_A$), et une ligne de frontière $L_1$ orthogonale au premier objectif droit (14a) et passant à travers les troisièmes coordonnées géographiques ($LAT_B$, $LON_B$),

ladite deuxième zone d'opération (V) étant comprise entre une ligne de frontière $L_2$ orthogonale au deuxième objectif droit (14b) et passant à travers les troisièmes coordonnées géographiques ($LAT_B$, $LON_B$), et une ligne de frontière $L_3$ orthogonale au deuxième objectif droit (14b) et passant à travers les quatrièmes coordonnées géographiques ($LAT_C$, $LON_C$), et

ladite troisième zone d'opération (III) étant comprise entre la ligne de frontière $L_2$ et la ligne de frontière $L_1$ et étant définie par le chevauchement partiel des première et deuxièmes zones d'opération, le procédé comprenant en outre les étapes consistant à :

• commander ledit dispositif de capture (2) pour acquérir des images associées au premier objectif droit (14a) à un premier rythme d'acquisition quand l'aéronef (1) vole au-dessus de ladite première zone d'opération (II), mais pas de ladite troisième zone d'opération (III) ;

• commander ledit dispositif de capture (2) pour acquérir des images associées au deuxième objectif droit (14b) à un deuxième rythme d'acquisition quand l'aéronef (1) vole au-dessus de ladite deuxième zone d'opération (V), mais pas de ladite troisième zone d'opération (III) ; et

• commander ledit dispositif de capture (2) pour acquérir des images associées au premier objectif droit (14a) à un troisième rythme d'acquisition, supérieur au premier et au deuxième rythme d'acquisition, quand l'aéronef (1) vole au-dessus de ladite troisième zone d'opération (III).

**10.** Procédé de contrôle selon la revendication 9, comprenant en outre les étapes consistant à :

subdiviser le premier objectif droit (14a) en une pluralité de premiers sous-segments droits ($A_i$) ;

subdiviser le deuxième objectif droit (14b) en une pluralité de deuxièmes sous-segments droits ($B_i$) ; et

mettre à jour périodiquement les premières coordonnées géographiques de l'aéronef le long de ladite direction de chemin de vol au moyen du dispositif de positionnement (4),

lesdites étapes pour déterminer si la première ligne droite idéale ou la deuxième ligne droite idéale existe étant réalisées périodiquement au niveau de chaque premier ou, respectivement, deuxième sous-segment droit ($A_i$, $B_i$) .

**11.** Procédé de contrôle selon la revendication 9 ou 10, dans lequel l'étape (iv) inclut :

le calcul de première et deuxième lignes droites intermédiaires respectives passant à travers un point défini par les premières coordonnées géographiques ($LAT_V$, $LON_V$) et à travers un point respectif (A, B) identifié par les deuxièmes ($LAT_A$, $LON_A$) et, respectivement, les troisièmes ($LAT_B$, $LON_B$) coordonnées géographiques ; et le fait de déterminer si au moins une desdites première et deuxième lignes droites intermédiaires forme au moins un angle respectif de moins de 90° avec la direction de chemin de vol ($d_{TRK}$) et, si c'est le cas, déterminer ladite première ligne droite idéale.

**12.** Procédé de contrôle selon l'une quelconque des revendications 9-11, dans lequel l'étape (vi) inclut :

le calcul d'une troisième ligne droite intermédiaire passant à travers un point identifié par les premières coordonnées géographiques ($LAT_V$, $LON_V$) et un point (C) identifié par les quatrièmes coordonnées géographiques ($LAT_C$, $LON_C$) ;
le fait de vérifier si la troisième ligne droite intermédiaire forme au moins un angle de moins de 90° avec la direction de chemin de vol ($d_{TRK}$) ; et, si c'est le cas,
la détermination de ladite deuxième ligne droite idéale.

**13.** Procédé de contrôle selon l'une quelconque des revendications 9-12, comprenant en outre les étapes consistant à :

commander ledit dispositif de capture (2) pour acquérir des images associées au premier objectif droit (14a) à un rythme d'acquisition supérieur au premier rythme d'acquisition quand l'aéronef (1) vole au-dessus d'une troisième partie ($III_1$), contiguë à la première zone d'opération, de ladite troisième zone d'opération (III) ; et
commander ledit dispositif de capture (2) pour acquérir des images associées au deuxième objectif droit (14b) à un rythme d'acquisition supérieur au deuxième rythme d'acquisition quand l'aéronef (1) vole au-dessus d'une deuxième partie ($III_2$), contiguë à ladite première partie, de ladite troisième zone d'opération (III).

**14.** Procédé de contrôle selon l'une quelconque des revendications 9-13, dans lequel, quand l'aéronef (1) vole au-dessus de la première sous-zone géographique (10a), le procédé comprend en outre les étapes consistant à :

calculer la valeur d'un angle $\gamma$ entre le premier objectif droit (14a) et la première ligne droite intermédiaire et s'étendant seulement dans la première sous-zone géographique (10a) ;
calculer la valeur d'un angle $\rho$ entre la ligne de frontière $L_1$ et la deuxième ligne droite intermédiaire, et s'étendant seulement dans la première sous-zone géographique (10a) ;
calculer la valeur d'un angle $\gamma_1$ entre la ligne de frontière $L_2$ et la deuxième ligne droite intermédiaire et s'étendant seulement dans la première sous-zone géographique (10a) ;
calculer la valeur d'un angle $\rho_1$ entre la ligne de frontière $L_3$ et la troisième ligne droite intermédiaire et s'étendant seulement dans la première sous-zone géographique (10a) ;
calculer la valeur d'un angle $\delta$ entre la ligne de frontière $L_1$ et la ligne de frontière $L_2$ et s'étendant seulement dans la première sous-zone géographique (10a) ;
commander ledit dispositif de capture (2) de manière à acquérir des images associées au premier objectif droit (14a) au premier rythme d'acquisition quand l'aéronef (1) vole au-dessus de la première zone d'opération (II), mais pas de la troisième zone d'opération (III) et quand $|\gamma|<90°$, $\rho\geq0°$ et $|\gamma_1|<0°$ ;
commander ledit dispositif de capture (2) de manière à acquérir des images associées au deuxième objectif droit (14b) au deuxième rythme d'acquisition quand l'aéronef (1) vole au-dessus de la deuxième zone d'opération (V), mais pas de la troisième zone d'opération (III) et quand $\rho<0°$, $\gamma_1<0°$ et $\rho_1>0°$ ;
commander ledit dispositif de capture (2) de manière à acquérir des images associées au premier objectif droit (14a) au troisième rythme d'acquisition quand l'aéronef (1) vole au-dessus de la troisième zone d'opération (III) et quand $\rho>\delta/2$ ; et
commander ledit dispositif de capture (2) de manière à acquérir des images associées au deuxième objectif droit (14b) au quatrième rythme d'acquisition quand l'aéronef (1) vole au-dessus de la troisième zone d'opération (III) et quand $\rho<\delta/2$.

**15.** Procédé de contrôle selon l'une quelconque des revendications 9-14, comprenant en outre les étapes consistant à :

définir une quatrième zone d'opération (IV) dans la deuxième sous-zone géographique (10b) entre la ligne de frontière $L_1$ et la ligne de frontière $L_2$ ;
définir une cinquième zone d'opération (I) dans une zone géographique externe aux première et deuxième sous-zones géographiques (10a et 10b) et délimitée par la ligne de frontière $L_4$ ;
définir une sixième zone d'opération (VI) dans une zone géographique externe aux première et deuxième sous-zones géographiques (10a et 10b) et délimitée par la ligne de frontière $L_3$ ;
commander ledit dispositif de capture (2) pour acquérir des images associées au deuxième emplacement au sol (B) quand l'aéronef (1) vole au-dessus de ladite quatrième zone d'opération (IV) ;

commander ledit dispositif de capture (2) pour acquérir des images associées au premier emplacement au sol (A) quand l'aéronef (1) vole au-dessus de ladite cinquième zone d'opération (I) ; et

commander ledit dispositif de capture (2) pour acquérir des images associées au troisième emplacement au sol (C) quand l'aéronef (1) vole au-dessus de ladite sixième zone d'opération (VI).

# FIG. 1

# FIG. 2

# FIG. 3

FIG. 4

FIG. 5

FIG. 6

EP 2 873 947 B1

FIG. 7

FIG. 8

EP 2 873 947 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2010305782 A

**Non-patent literature cited in the description**

• **T. VINCENTY.** Direct and Inverse Solutions of Geodesics on the Ellipsoid with Application of Nested Equations. *Survey Review,* April 1975, vol. 23 (176), 88-93